(19)

**Europäisches Patentamt**
**European Patent Office**
**Office européen des brevets**

(11) **EP 3 952 245 B1**

(12) **EUROPEAN PATENT SPECIFICATION**

(45) Date of publication and mention
of the grant of the patent:
**08.10.2025 Bulletin 2025/41**

(21) Application number: **20189664.4**

(22) Date of filing: **05.08.2020**

(51) International Patent Classification (IPC):
*H04L 12/46* (2006.01)      *H04L 67/12* (2022.01)
*H04L 45/74* (2022.01)      *H04L 69/04* (2022.01)
*H04L 12/403* (2006.01)

(52) Cooperative Patent Classification (CPC):
**H04L 67/12; H04L 12/403; H04L 45/74;**
H04L 67/63; H04L 69/04

(54) **DEVICE ADDRESSING IN INDUSTRIAL CONTROL NETWORKS**

VORRICHTUNGSADRESSIERUNG IN INDUSTRIELLEN STEUERUNGSNETZWERKEN

ADRESSAGE DE DISPOSITIFS DANS LES RÉSEAUX DE CONTRÔLE INDUSTRIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.02.2022 Bulletin 2022/06**

(73) Proprietor: **CODESYS Holding GmbH
87439 Kempten (DE)**

(72) Inventors:
• **Schubel, Dirk
87439 Kempten (DE)**
• **Schünemann, Ulf
87435 Kempten (DE)**

(74) Representative: **Lucke, Andreas
Boehmert & Boehmert
Anwaltspartnerschaft mbB
Pettenkoferstrasse 22
80336 München (DE)**

(56) References cited:
**WO-A1-2020/125988      US-A1- 2020 022 022**

• **ERICSSON: "[104#37][NR/IIoT] Ethernet Header
Compression email discussion report, TP", vol.
RAN WG2, no. Athens, Greece; 20190225 -
20190301, 1 March 2019 (2019-03-01),
XP051603664, Retrieved from the Internet
<URL:http://www.3gpp.org/ftp/tsg%5Fran/WG2%
5FRL2/TSGR2%5F105/Docs/R2%2D1902355%
2Ezip> [retrieved on 20190301]**
• **CMCC: "Enhancement for Time-Sensitive
Networking", vol. RAN WG2, no. Chengdu,
China; 20181008 - 20181012, 28 September 2018
(2018-09-28), XP051524625, Retrieved from the
Internet <URL:http://www.3gpp.org/ftp/tsg%
5Fran/WG2%5FRL2/TSGR2%5F103bis/Docs/
R2%2D1815270%2Ezip> [retrieved on 20180928]**

## Description

Technical Field

The disclosure relates to techniques for addressing industrial control devices in an industrial control network, in particular for unambiguously addressing industrial control devices across an industrial control network in safety-critical control applications.

Background

Industrial controller units are ubiquitous in modern manufacturing and process control, and are regularly employed to control manufacturing equipment, chemical plants or other machinery. Typically, an industrial controller unit may run an industrial control program, such as a compiled industrial control program or ladder logic instructions, and may send control instructions to an actuator unit of the controlled machinery in accordance with the industrial control program via an industrial control network. The industrial controller unit may also receive data from a sensor unit of the controlled machinery via the industrial control network, such as parameters relating to process variables or measurement data pertaining to the machinery, which may be processed in the industrial controller unit and may serve as feedback for the industrial control program or actuator units.

In many practically relevant applications, an industrial control network comprises a large number of different industrial controller units, which may each control their respective associated machinery. Much of the communication may be back and forth between an industrial controller unit and its associated machinery, such as via a field bus network that defines a corresponding sub-network within the industrial control network. However, at least some of the components of the industrial control network may also be linked by an overarching joint network, such as an Ethernet network, and it may sometimes be desirable to cross-communicate via the network between different industrial controller units/different sub-networks pertaining to different machinery. Such a cross-communication may also happen inadvertently, for instance when I/O messages intended to be communicated only within a first sub-network are misrouted via the Ethernet network to a second sub-network due to an ill-configured router. These mis-routed messages may trigger the actuator units and/or sensor units in the second sub-network to enter a safe default state, or even to behave in unwanted and maybe detrimental ways. This is particularly critical in safety-relevant applications, as described in US 2017/0139388 A1.

The currently available safety-classified input/output protocols hence require unique and unambiguous addressing of the input/output devices within the industrial control network, such as by an additional piece of address information. For an industrial control field bus network, these requirements are specified in IEC 61784-3 "Industrial communication networks -Profiles - Part 3: Functional safety field buses". Even in a moderately sized network, guaranteeing the unambiguity of the addressing is a formidable and error-prone task, and typically requires expert knowledge. In case different machines that employee the same safety-classified input/output protocol are operated within a common industrial control network that allows cross-communication, or in case another sub-network shall be added to an existing network, the complexity scales up quickly. All safety-relevant input/output devices may need to be considered part of a common overarching safety network. In order to effectively protect against mis-routing, this is true even if these input/output devices may have their respective own physical connections, such as different network interface cards. Techniques for Ethernet header compression are disclosed in Ericsson's "Ethernet Header Compression email discussion report, TP", Tdoc R2-1902355, 3GPP TSG-RAN WG2 #105, Athens, Greece, 25th February - 1st March 2019; CMCC's "Enhancement for Time-Sensitive Networking", R2-1815270, 3GPP TSG-RAN WG2 Meeting #103bis; Chengdu, China, 8-12 October 2018, and in international patent publication WO 2020/125988 A1.

Overview

In view of the shortcomings described above, there remains a need for improved addressing techniques in an industrial control network, in particular for safety-critical applications. This objective is achieved with an industrial control sender device according to independent claim 1, an industrial control receiver device according to independent claim 4, a method for communicating with a first industrial control receiver device according to independent claim 7, and a method for communicating with a first industrial control sender device according to independent claim 8. Claim 11 seeks protection for a computer program. The dependent claims relate to preferred embodiments.

In a first aspect, the disclosure relates to an industrial control sender device adapted to communicate with a first industrial control receiver device via an industrial control network according to a communication protocol, the industrial control sender device comprising: a message generation unit adapted to generate a first message to be sent to the first industrial control receiver device, wherein the first message complies with the communication protocol and comprises a first functional data string and a first payload data string; an encoder unit adapted to encode at least part of the first functional data string according to a first encoding algorithm to generate a first encoded message comprising a first encoded functional data string; and a sender unit adapted to send the first encoded message comprising the first encoded functional data string to the first industrial control receiver device via the industrial control network.

The encoder unit may encode the first functional data string into a first encoded functional data string that may be unambiguous in the sense that it can be identified and decoded by the designated recipient/recipients, such as the first industrial control receiver device, but may be identified as foreign by any other receiver device that advertently or inadvertently receives the first encoded functional data string. In effect, this may prevent these other receiver devices from responding to the first message in undesirable or uncontrolled ways.

As an example, different encoder units may be employed for different sub-networks within the overarching industrial control network, thereby effectively dividing the industrial control network into sub-networks with disjoint address spaces even though these sub-networks may each employ one and the same underlying input/output communication protocol.

These techniques can significantly simplify the task of organizing and controlling large industrial control networks, or adding further sub-networks to an existing industrial control network while at the same time reducing the effects of mis-routed messages.

Any communication protocol suitable for communication in an industrial control network or for industrial control applications may be employed in the context of the present disclosure.

According to an embodiment, the communication protocol comprises a functional safety communication protocol, such as a communication protocol in accordance with IEC 61784-3-12, sometimes referred to as a "Fail Safe over EtherCAT" (FSoE) protocol.

The first message may be any message that the communication protocol specifies for communication between different devices within the industrial control network, in other words a protocol-compliant message.

The message comprises at least the first functional data string, which may be a string adapted for addressing purposes, as well as the first payload data string.

According to an embodiment, the first functional data string comprises information pertaining to a process flow, such as a header string and/or an address string.

By contrast, the payload data string may represent or encode the data to be transferred, such as a command for an actuator unit or a reading from a sensor unit.

In an embodiment, the encoder unit is adapted not to encode the first payload data string.

According to an embodiment, the first encoded message and/or the first encoded functional data string does not comply with the communication protocol.

This may allow a second industrial control receiver device to which the first encoded message is (inadvertently) routed to identify the first encoded message as foreign, or as pertaining to a different sub-network, and may prevent the second industrial control receiver device from responding to the first encoded message in an uncontrolled or undesirable manner.

An encoding algorithm, in the context of the present disclosure, may refer to any operation or set of instructions adapted to map at least part of the first functional data string into another data string, which may be different from the first functional data string.

According to an embodiment, the first encoding algorithm is reversible.

This may allow the first industrial control receiver device for which the first message is intended to decode the first message from the first encoded message, by means of a decoding operation that reverts the encoding operation.

For instance, the first encoding algorithm may comprise a permutation operation, in particular a shift operation or a circular shift operation or a rotate operation.

According to an embodiment, the first encoding algorithm matches a corresponding first decoding algorithm implemented in the first industrial control receiver device to decode the first encoded functional data string.

In particular, the first encoding algorithm is selected in accordance with a corresponding first decoding algorithm implemented in the first industrial control receiver device to decode the first encoded functional data string.

The first encoding algorithm may comprise or may be an inverse of the first decoding algorithm, or vice versa.

As a consequence, the industrial control sender device may communicate with the first industrial control receiver device employing the underlying communication protocol, whereas different industrial control receiver devices for which the first message is not intended may be placed in a position to identify the first message as foreign, and may be prevented from inadvertently processing the first message.

According to an embodiment, the first encoding algorithm does not match a second decoding algorithm implemented in a second industrial control receiver device to decode a second encoded functional data string, wherein the second industrial control receiver device is different from the first industrial control receiver device and is connected to the industrial control sender device via the industrial control network.

According to an embodiment, a message string resulting from applying the second decoding algorithm to the first encoded functional data string does not comply with the communication protocol.

This allows dividing up the industrial control network into a plurality of different sub-networks that each have their own dedicated and differing pairs of encoding and decoding algorithms, so to allow communication within a given sub-network, or in between selected sub-networks, but to prevent inadvertent mis-routing of messages between different sub-networks.

In the first aspect, the disclosure further relates to a system comprising: an industrial control sender device; and a first industrial control receiver device connected to the industrial control sender device via an industrial control network. The industrial control sender device is adapted to communicate with the first industrial control receiver device according to a communication protocol, and comprises: a message generation unit adapted to generate a first message to be sent to the first industrial control receiver device, wherein the first message complies with the communication protocol and comprises a first functional data string and a first payload data string; and an encoder unit adapted to encode at least part of the first functional data string according to a first encoding algorithm to generate a first encoded message comprising a first encoded functional data string; and a sender unit adapted to send the first encoded message comprising the first encoded functional data string to the first industrial control receiver device via the industrial control network; wherein the first encoding algorithm matches a corresponding first decoding algorithm implemented in the first industrial control receiver device to decode the first encoded functional data string.

According to an embodiment, the system further comprises a second industrial control receiver device different from the first industrial control receiver device, wherein the second industrial control receiver device is connected to the industrial control sender device via the industrial control network; wherein the first encoding algorithm does not match a second decoding algorithm implemented in the second industrial control receiver device to decode a second functional data string.

This may prevent inadvertent communication of payload data between the first industrial control sender device and the second industrial control receiver device.

According to an embodiment, the message generation unit may be adapted to generate a second message to be sent to a second industrial control receiver device different from the first industrial control receiver device, wherein the second message complies with the communication protocol and comprises a second functional data string and a second payload data string; and wherein the encoder unit is adapted to encode at least part of the second functional data string according to a second encoding algorithm to generate a second encoded message comprising a second encoded functional data string, wherein the second encoding algorithm is different from the first encoding algorithm; and wherein the sender unit is adapted to send the second encoded message comprising the second encoded functional data string to the second industrial control receiver device.

According to an embodiment, the second encoded message and/or the second encoded functional data string does not comply with the communication protocol.

This may allow the sender unit to selectively communicate with different industrial control receiver devices employing different pairs of encoding/decoding algorithms, thereby facilitating selected cross-communication between different sub-networks that each employ the same underlying communication protocol while still maintaining address unambiguity.

According to an embodiment, a string resulting from applying a second decoding algorithm that matches the second encoding algorithm, in particular is an inverse of the second encoding algorithm, to the first encoded functional data string does not comply with the communication protocol.

Similarly, a string resulting from applying a first decoding algorithm that matches the first encoding algorithm, in particular is an inverse of the first encoding algorithm, to the second encoded functional data string does not comply with the communication protocol.

According to an embodiment, the disclosure may provide two or any higher number of different pairs of encoding/decoding algorithms, in particular for a corresponding split of the industrial control network into two or more different sub-networks with different address spaces.

An industrial control network, in the sense of the present disclosure, may refer to any network that comprises a plurality of input/output devices that operate in accordance with an industrial control program and that may communicate with one another according to the communication protocol.

According to an embodiment, the industrial control network comprises a wireless network and/or wired network.

In particular, the industrial control network may comprise a field bus network and/or an Ethernet network.

In the context of the present disclosure, any industrial control device capable of transmitting messages over the industrial control network may be considered an industrial control sender device.

Similarly, in the context of the present disclosure any industrial control device capable of receiving messages from the industrial control network may be considered an industrial control receiver device.

In many practically relevant settings, a given industrial control device in an industrial control environment may have both sender and receiver functionality, and hence may at the same time, or depending on the communication context, constitute an industrial control sender device and an industrial control receiver device, with some or all of the features described above.

According to an embodiment, the industrial control sender device may comprise or may be implemented by a programmable logic controller unit and/or an actuator unit adapted to actuate a controlled equipment in accordance with an industrial control program and/or a sensor unit adapted to sense a controlled equipment in accordance with an industrial control program.

Similarly, the industrial control receiver device may comprise a programmable logic controller unit and/or an actuator unit adapted to actuate a controlled equipment in accordance with an industrial control program and/or a sensor unit adapted to sense a controlled equipment in accordance with an industrial control program.

According to an embodiment, the industrial control sender device and the first industrial control receiver device are spatially remote, and are connected via the industrial control network.

According to another embodiment, the industrial control sender device and the first industrial control receiver device may form part of the same machinery, in particular a machinery controlled by an industrial control program.

According to a further embodiment, the industrial control sender device and the second industrial control receiver device are spatially remote, and are connected via the industrial control network.

In some embodiments, the industrial control sender device and the first industrial control receiver device may form part of a first sub-network of the industrial control network, such as a first field bus network.

The second industrial control receiver device may form part of a second sub-network of the industrial control network different from the first sub-network of the industrial control network, such as a second field bus network different from the first field bus network.

The first sub-network and the second sub-network may be communicatively coupled in the industrial control network, such as via an Ethernet connection.

According to an embodiment, the message generation unit and/or the encoder unit and/or the sender unit may be implemented as distinct and spatially separated units. In other embodiments, two or more of these units may be combined into a single unit.

In some embodiments, the message generation unit and/or the encoder unit and/or the sender unit are implemented in hardware. In other embodiments, the message generation unit and/or the encoder unit and/or the sender unit are at least partly implemented in software or firmware.

The techniques of the present disclosure have so far been described from the perspective of the industrial control sender device. However, the disclosure may likewise be characterized from the complimentary perspective of the industrial control receiver device.

In a second aspect, the disclosure relates to an industrial control receiver device adapted to communicate with a first industrial control sender device via an industrial control network according to a communication protocol, the industrial control receiver device comprising: a receiver unit adapted to receive a first message from the first industrial control sender device via the industrial control network, the first message comprising a first functional data string and a first payload data string; and a decoder unit adapted to decode the first functional data string in accordance with a first decoding algorithm to generate a first decoded message comprising a first decoded functional data string.

According to an embodiment, the industrial control receiver device further comprises a comparison unit adapted to compare the first decoded functional data string with at least a predefined functional data string.

This may allow the industrial control receiver device to check whether the first decoded functional data string was intended to be transmitted to the industrial control receiver device, or complies with the communication protocol.

According to an embodiment, the industrial control receiver device is adapted to process the decoded message only if a comparison by the comparison unit yields that the first decoded functional data string matches a predefined functional data string.

According to an embodiment, the first decoded functional data string comprises a header string and/or an address string.

In an embodiment, the decoder unit is adapted not to decode the first payload data string.

According to an embodiment, the received first functional data string does not comply with the communication protocol.

In an embodiment, the first decoded functional data string complies with the communication protocol.

According to an embodiment, the first decoding algorithm is reversible.

In particular, the first decoding algorithm may comprise a permutation operation, such as a shift operation or a circular shift operation or a rotate operation.

According to an embodiment, the first decoding algorithm matches a corresponding first encoding algorithm implemented in the first industrial control sender device to encode at least part of the first functional data string.

In an embodiment, the first decoding algorithm is selected in accordance with a corresponding first encoding algorithm implemented in the first industrial control sender device to encode at least part of the first functional data string.

In particular, the first decoding algorithm may comprise or may be an inverse of the first encoding algorithm, or vice versa.

In an embodiment, the first decoding algorithm does not match a second encoding algorithm implemented in a second industrial control sender device to encode at least part of a second functional data string, wherein the second industrial control sender device is different from the first industrial control sender device and is connected to the industrial control receiver device via the industrial control network.

According to an embodiment, a string resulting from applying the first decoding algorithm to the first encoded functional data string yields the functional data string.

According to an embodiment, a string resulting from applying a second decoding algorithm that matches the second encoding algorithm, in particular is an inverse of the second encoding algorithm, to the first encoded functional data string does not comply with the communication protocol.

Similarly, a string resulting from applying the first decoding algorithm to a functional data string encoded by means of the second encoding algorithm that matches the second decoding algorithm, in particular is an inverse of the second decoding algorithm, does not comply with the communication protocol.

This relationship may allow the industrial control receiver device to distinguish messages received from an associated first industrial control sender device from messages received from a second industrial control sender device different from the first industrial control sender device.

For instance, the industrial control receiver device may reject the messages received from the second industrial control sender device as foreign, and the identification as foreign may prevent the industrial control receiver device from inadvertently processing these messages.

In other embodiments, the industrial control receiver device may be adapted to receive and process messages from a plurality of industrial control sender devices employing a plurality of different encoding algorithms, such as both from the first industrial control sender device and the second industrial control sender device.

In some embodiments, the industrial control receiver device may be adapted to decode the received message in accordance with both the first decoding algorithm and a second decoding algorithm that matches the second encoding algorithm, in particular is an inverse of the second encoding algorithm.

For example, only the message decoded according to the first decoding algorithm or the message decoded according to the second algorithm may correspond to a message that complies with the communication protocol, and this may allow the industrial control receiver devise to distinguish whether the message originated from the first industrial control sender device or the second industrial control sender device.

As described above with reference to the industrial control sender device, these techniques may hence allow a subdivision of the industrial control network into disjoint sub-networks that each have their respective address spaces and employ the same underlying communication protocol, while nevertheless permitting unambiguous cross-communication between different sub-networks.

In the second aspect, the disclosure also relates to a system comprising an industrial control receiver device and a first industrial control sender device connected to the industrial control receiver device via an industrial control network. The industrial control receiver device is adapted to communicate with the first industrial control sender device according to a communication protocol, and comprises: a receiver unit adapted to receive a first message from the first industrial control sender device via the industrial control network, the first message comprising a first functional data string and a first payload data string; and a decoder unit adapted to decode the first functional data string in accordance with a first decoding algorithm; wherein the first decoding algorithm matches a corresponding first encoding algorithm implemented in the first industrial control sender device to encode at least part of the functional data stream.

According to an embodiment, the system further comprises a second industrial control sender device, wherein the second industrial control sender device is different from the first industrial control sender device and is connected to the industrial control receiver device via the industrial control network.

According to an embodiment, the first decoding algorithm does not match a second encoding algorithm implemented in the second industrial control sender device to encode at least part of a second functional data string.

According to an embodiment, the receiver unit is adapted to receive a second message from a second industrial control sender device different from the first industrial control sender device via the industrial control network in accordance with the communication protocol, the second message comprising a second functional data string and a second payload data string; and the decoder unit is adapted to decode the second functional data string in accordance with a second decoding algorithm to generate a second decoded message comprising a second decoded functional data string, wherein the second decoding algorithm is different from the first decoding algorithm.

According to an embodiment, the received second functional data string does not comply with the communication protocol.

In an embodiment, the second decoded functional data string complies with the communication protocol.

The industrial control receiver device may be adapted to distinguish, based on the first decoded message and the second decoded message, in particular based on the first decoded functional data string and the second decoded functional data string, the origin of the first message and/or the second message. For instance, the industrial control receiver device may be adapted to verify that the first message originated from the first industrial control sender device. The industrial control receiver device may also be adapted to verify that the second message did not originate from the first industrial control sender device, and/or that the second message originated from the second industrial control sender device.

As explained above with respect to the first aspect, this may allow dividing the overarching industrial control network into disjoint sub-networks with disjoint address spaces, with the optional possibility of allowing cross-communication between different sub-networks.

For instance, the industrial control receiver device and the first industrial control sender device may form part of a first sub-network, such as a first field bus network. The second industrial control sender device may form part of a second sub-network different from the first sub-network, such as a second field bus network different from the first field bus network.

The first sub-network and the second sub-network may be communicatively coupled in the industrial control network, such as via an Ethernet connection.

According to an embodiment, the industrial control receiver device comprises a programmable controller unit and/or an actuator unit adapted to actuate a controlled equipment in accordance with an industrial control program and/or a sensor unit adapted to sense a controlled equipment in accordance with an industrial control program.

According to an embodiment, the industrial control receiver device and the first industrial control sender device are spatially remote, and are connected via the industrial control network.

According to another embodiment, the industrial control receiver device and the first industrial control sender device form part of a same machinery, in particular a machinery controlled by an industrial control program.

According to an embodiment, the industrial control receiver device and the second industrial control sender device are spatially remote, and are connected via the industrial control network.

In some embodiments, the receiver unit and/or the decoder unit and/or the comparison unit may be separate and spatially distinct units. In other embodiments, two or more of the receiver unit and/or the decoder unit and/or the comparison unit may be implemented in a common unit.

According to an embodiment, the receiver unit and/or the decoder unit and/or the comparison unit may be implemented in hardware. In other embodiments, the receiver unit and/or the decoder unit and/or the comparison unit may be at least partly implemented in software or firmware.

According to a third aspect, the disclosure also relates to a system comprising an industrial control sender device with some or all of the features described above, and an industrial control receiver device with some or all of the features described above.

In particular, the disclosure relates to a system comprising an industrial control sender device and an industrial control receiver device, wherein the industrial control sender device is adapted to communicate with the industrial control receiver device via an industrial control network according to a communication protocol. The industrial control sender device comprises: a message generation unit adapted to generate a message to be sent to the industrial control receiver device, wherein the message complies with the communication protocol and comprises a functional data string and a payload data string; an encoder unit adapted to encode at least part of the functional data string according to an encoding algorithm to generate an encoded message comprising an encoded functional data string; and a sender unit adapted to send the encoded message comprising the encoded functional data string to the industrial control receiver device via the industrial control network. The industrial control receiver device comprises: a receiver unit adapted to receive the encoded message from the industrial control sender device via the industrial control network; and a decoder unit adapted to decode the encoded functional data string in accordance with a decoding algorithm to generate a decoded message comprising a decoded functional data string.

According to an embodiment, the industrial control receiver device further comprises a comparison unit adapted to compare the decoded functional data string with at least a predefined functional data string.

In particular, the decoded functional data string may correspond to the functional data string.

In the first aspect, the disclosure also relates to a method for communicating with a first industrial control receiver device in an industrial control network by means of a communication protocol, the method comprising: generating a first message to be sent to the first industrial control receiver device, wherein the first message complies with the communication protocol and comprises a first functional data string and a first payload data string; encoding at least part of the first functional data string according to a first encoding algorithm to generate a first encoded message comprising a first encoded functional data string; and sending the first encoded message comprising the first encoded functional data string to the first industrial control receiver device via the industrial control network.

According to an embodiment, the method comprises not encoding the first payload data string.

In an embodiment, the first encoding algorithm matches a corresponding first decoding algorithm implemented in the first industrial control receiver device to decode the first encoded functional data string.

According to an embodiment, the first encoding algorithm does not match a second decoding algorithm implemented in a second industrial control receiver device to decode an encoded functional data string, wherein the second industrial control receiver device is different from the first industrial control receiver device .

According to an embodiment, the method further comprises: generating a second message to be sent to a second industrial control receiver device different from the first industrial control receiver device, wherein the second message complies with the communication protocol and comprises a second functional data string and a second payload data string; encoding at least part of the second functional data string according to a second encoding algorithm to generate a second encoded message comprising a second encoded functional data string, wherein the second encoding algorithm is different from the first encoding algorithm; and sending the second encoded message comprising the second encoded functional data string to the second industrial control receiver device.

In the second aspect, the disclosure further relates to a method for communicating with a first industrial control sender device in an industrial control network by means of a communication protocol, the method comprising: receiving a first message from the first industrial control sender device via the industrial control network, the first message comprising a first functional data string and a first payload data string; and decoding the first functional data string in accordance with a first decoding algorithm to generate a first decoded message comprising a first decoded functional data string.

According to an embodiment, the method further comprises comparing the first decoded functional data string with at least a predefined functional data string.

In particular, the method may further comprise processing the first decoded message only if the comparison yields that the first decoded functional data string matches the predefined functional data string.

According to an embodiment, the method further comprises not decoding the first payload data string.

In an embodiment, the first decoding algorithm matches a corresponding first encoding algorithm implemented in the first industrial control sender device to encode at least part of the first functional data string.

According to an embodiment, the first decoding algorithm does not match a second encoding algorithm implemented in a second industrial control sender device to encode at least part of a second functional data string, wherein the second industrial control sender device is different from the first industrial control sender device.

According to an embodiment, the method further comprises: receiving a second message from a second industrial control sender device different from the first industrial control sender device via the industrial control network in accordance with the communication protocol, the second message comprising a second functional data string and a second payload data string; and decoding the second functional data string in accordance with a second decoding algorithm to generate a second decoded message comprising a second decoded functional data string, wherein the second decoding algorithm is different from the first decoding algorithm.

In the third aspect, the disclosure further relates to a method for communicating between an industrial control sender device and an industrial control receiver device via an industrial control network by means of a communication protocol, the method comprising: generating a message to be sent to the industrial control receiver device, wherein the message complies with the communication protocol and comprises a functional data string and a payload data string; encoding at least part of the functional data string according to an encoding algorithm to generate an encoded message comprising an encoded functional data string; sending the encoded message comprising the encoded functional data string to the industrial control receiver device while the industrial control network; receiving the encoded message from the industrial control sender device via the industrial control network; and decoding the encoded functional data string in accordance with a decoding algorithm.

According to an embodiment, the method further comprises comparing the decoded functional data string with at least a predefined functional data string.

According to an embodiment, the decoded functional data string corresponds to the functional data string.

In a fourth aspect, the disclosure also relates to a computer program or a computer program product comprising computer-readable instructions, such that the instructions, when read on a computing device, implement on the computing device a method with some or all of the features described above.

Brief Description of the Drawings

The features and numerous advantages of the disclosure will become best apparent from a detailed description of exemplary embodiments with reference to the accompanying drawings, in which:

Fig. 1    is a schematic illustration of an industrial control network in which the techniques according to the present disclosure can be employed;

Fig. 2    illustrates the industrial control network of Fig. 1 with a subdivision into sub-networks according to an embodiment;

Fig. 3    is a schematic illustration of an industrial control sender device according to an embodiment;

Fig. 4    is a schematic illustration of an industrial control receiver device according to an embodiment;

Fig. 5    is a schematic illustration of an architecture for communicating between at least one sender device and at least one receiver device in an industrial control environment according to an embodiment;

Fig. 6   is a schematic illustration of an architecture for communicating between at least one sender device and at least one receiver device employing filtering according to an embodiment;

Fig. 7   is a schematic illustration of an architecture for communicating between at least one sender device and at least one receiver device in an industrial control network employing cross-communication across sub-networks according to an embodiment;

Fig. 8   is a flow diagram illustrating a method for communicating with a first industrial control receiver device according to an embodiment; and

Fig. 9   is a flow diagram illustrating a method for communicating with the first industrial control sender device according to an embodiment.

Detailed Description

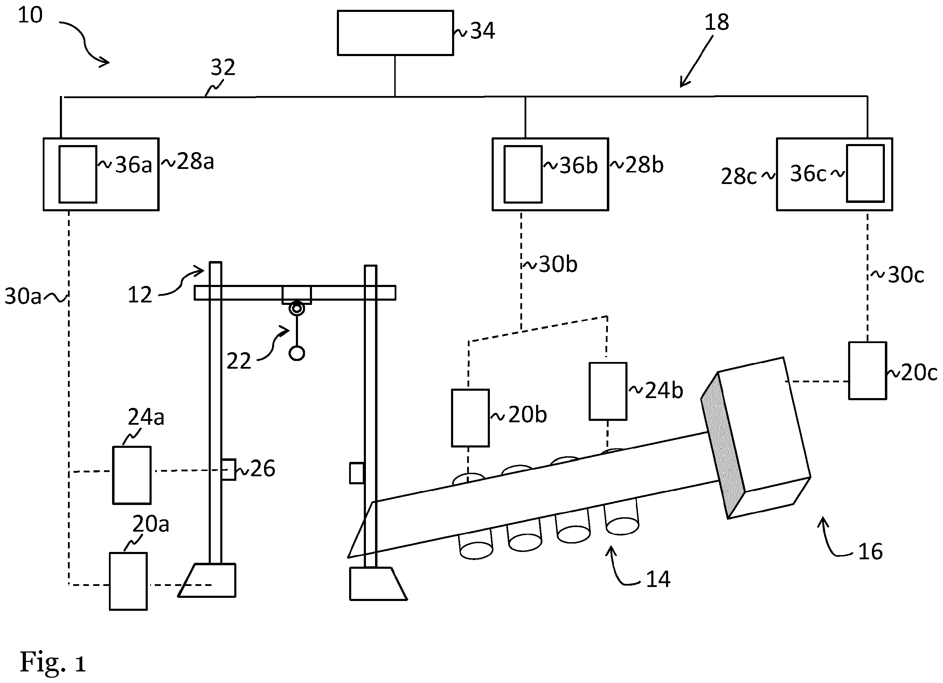

Fig. 1 is a schematic illustration of an industrial control environment 10 in which the techniques according to the present disclosure may be employed. The industrial control environment 10 depicted in Fig. 1 is a factory environment in which goods are transported from a gantry crane 12 via a conveyor belt 14 to a packaging station 16, which are all connected and controlled by means of an industrial control network 18. However, this is merely one example chosen for illustration, and the techniques according to the present disclosure may be employed in a wide range of industrial control environments, from factory environments and chemical plants to applications in building or lighting automation.

The operation of the gantry crane 12 may be controlled by means of a plurality of actuators or sensors. For instance, a first actuator unit 20a may be connected to the gantry crane 12 and may be adapted to control the movement of a hook assembly 22 of the gantry crane, so to place goods on the conveyor belt 14. A first sensor unit 24a may be connected to an infrared light barrier sensor 26, which may be adapted to sense the presence of humans or other obstacles in the operation path of the hook assembly 22, so to trigger an alarm signal and shut down the operation of the movable hook assembly 22 in case these obstacles may interfere with the safe operation of the gantry crane 12.

The first actuator unit 20a and the first sensor unit 24a may be communicatively connected to a first industrial controller unit 28a by means of a first network 30a, such as a first field bus network. The first industrial controller unit 28a may run an industrial control program, such as in the form of a compiled industrial control program or ladder logic instructions, and may exchange messages with the first actuator unit 20a and the first sensor unit 24a via the first field bus network 30a in accordance with a first communication protocol, such as a communication protocol compliant with IEC 61784-3. For instance, the first industrial controller unit 28a may provide operation commands for an operation of the movable hook assembly 22 to the gantry crane 12 via the first field bus network 30a and the first actuator unit 20a. In addition, the first industrial controller unit 28a may receive control signals from the infrared light barrier sensor 26 via the first sensor unit 24a and the first field bus network 30a, and in response to the received sensor signals may send a command to the first actuator unit 20a to pause or change the movement of the hook assembly 22.

In the embodiment of Fig. 1, the first actuator unit 20a and the first sensor unit 24a are shown as separate units. However, in some implementations the actuator units and sensor units may be combined into a common unit, and may in fact be integrated into the controlled machinery, such as the gantry crane 12. In general, there may be a larger number of actuator units and sensor units controlling different operations of the gantry crane 12.

An operation of the conveyor belt 14 may be controlled similarly by means of a second actuator unit 20b that is adapted to actuate a driving roller of the conveyor belt 14 in response to driving signals, wherein the second actuator unit 20b receives the driving signals from a second industrial controller unit 28b via a second field bus network 30b according to a second communication protocol. A second sensor unit 24b may be connected to a sensor device (not shown) adapted to measure a speed of movement of the conveyor belt 14 and may provide corresponding sensor signals to the second industrial controller unit 28b via the second field bus network 30b. The second industrial controller unit 28b may process the sensor signals in a feedback loop to control the operation of the conveyor belt 14 by means of the second actuator unit 20b. Again, a larger number of actuator units and/or sensor units may be connected to the second industrial controller unit 28b via the second field bus network 30b to control various aspects of the operation of the conveyor belt 14.

Similarly, a third actuator unit 20c may be adapted to control operation of the packaging station 16 in response to control signals, wherein the third actuator unit 20c receives the control signals from a third industrial controller unit 28c via a third field bus network 30c in accordance with a third communication protocol.

The first industrial controller unit 28a, the second industrial controller unit 28b and the third industrial controller unit 28c may be connected among one another by means of an interconnection network 32, which may again be a field bus network, but could also be a different type of network, such as an Ethernet network. Router elements 36a, 36b, 36c may be provided in the respective industrial controller units 28a, 28b, 28c to route messages via the respective field bus networks 30a, 30b, 30c and/or the interconnection network 32.

The interconnection network 32 and the field bus networks 30a, 30b, 30c may each form part of the industrial control network 18, which may also comprise any number of further machinery, industrial controller units, field bus networks, actuator units and/or sensor units beyond the equipment shown in Fig. 1. Each of these units may be adapted to send and/or receive messages according to their respective designated communication protocol.

The interconnection network 32 may allow the industrial controller units 28a, 28b, 28c to exchange industrial control programs, variables or files that may be required for the operation of the industrial control environment 10. The interconnection network 32 may also connect the industrial controller units 28a, 28b, 28c to a central programming and/or monitoring station 34, which may be employed by an operator to distribute industrial control programs or variables to the industrial controller units 28a, 28b, 28c, or to monitor an operation of the industrial controller units 28a, 28b, 28c or their associated machinery.

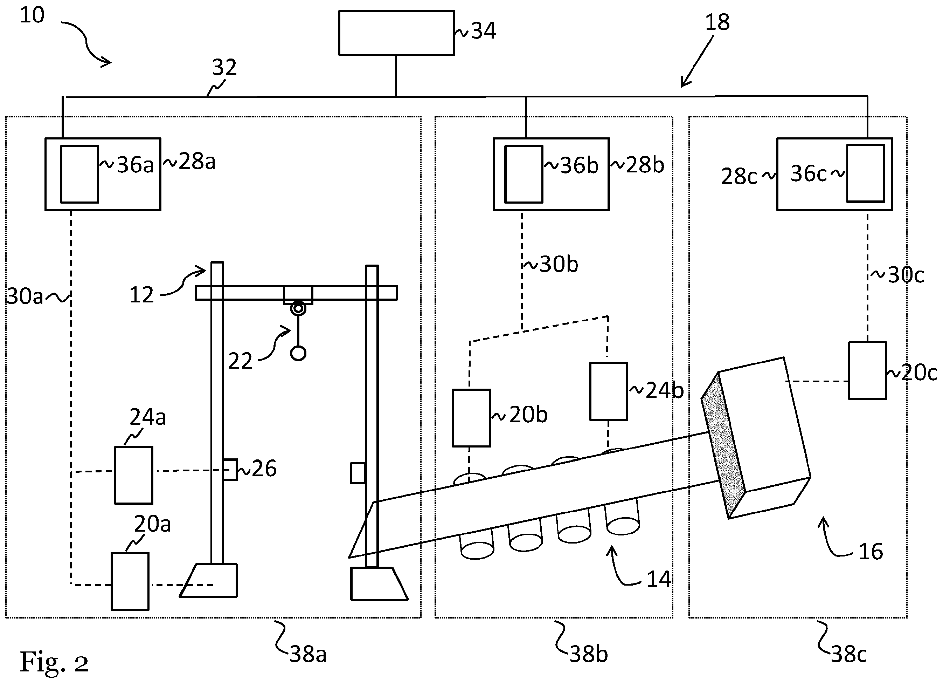

During operation of the industrial control environment 10, much of the communication may be in between the industrial controller units 28a, 28b, 28c and their associated machinery via the respective first, second, and third field bus networks 30a, 30b, 30c according to the respective first, second, and third communication protocols. Hence, the groups of components connected to the respective first, second, and third field bus networks 30a, 30b, 30c may be considered to form respective first, second, and third sub-networks 38a, 38b, 38c, as schematically illustrated in Fig. 2, which is otherwise identical to Fig. 1.

In order to guarantee that messages exchanged between different components via the respective field bus networks 30a, 30b, 30c within a given sub-network 38a, 38b, 38c reach their respective destinations, the network devices, both senders and receivers (such as the industrial controller units 28a, 28b, 28c, actuator units 20a, 20b, 20c and sensor units 24a, 24b) need to be provided with unique and unambiguous addresses, which requires careful planning and maintenance of the respective sub-network 38a, 38b, 38c.

However, the complexity does not end there. Messages may also be exchanged across the boundaries of the sub-network 38a, 38b, 38c, such as via the interconnection network 32. This may sometimes happen inadvertently, for instance when messages are mis-routed in a router element 36a, 36b, 36c that has not been configured correctly. If such a message designated for a first industrial control receiver device within the first sub-network 38a inadvertently reaches the second sub-network 38b or the third sub-network 38c, and if all the sub-networks 38a, 38b, 38c employ the same underlying field bus communication protocol, the mis-routed message may be received and processed by some receiver device that happens to share the same receiver address in the second sub-network 38b or the third sub-network 38c, and may trigger an unwanted response in that other sub-network. This error may be particularly critical in safety-relevant networks, such as networks specified in IEC 61784-3: "Industrial communication networks - Profiles - Part 3: Functional safety field buses".

In other applications, cross-communication across different sub-network 38a, 38b, 38c via the interconnection network 32 may even be desirable. Again, this may be particularly important in safety-critical applications. For instance, in case the infrared light barrier sensor 26 detects an object moving in the operation path of the gantry crane 12, it may be desirable to not only shut down operation of the gantry crane 12, but also stop operation of the conveyor belt 14 automatically and simultaneously. This requires the respective message to be transferred from the first sensor unit 24a via the first field bus network 30a, the first industrial controller unit 28a, the interconnection network 32, the second industrial controller unit 28b, the second field bus network 30b to the second actuator unit 20b.

Both coping with messages that have been mis-routed across different sub-network 38a, 38b, 38c, and making use of intented cross-communication across different sub-network 38a, 38b, 38c requires a unique and unambiguous addressing of sender and receiver devices not only within a given sub-network 38a, 38b, 38c, but across the entire industrial control network 18/industrial control environment 10. This is a formidable task, in particular in a large industrial control environment that may have dozens or even hundreds of different sender/receiver devices. The task becomes even more complex if the industrial control network 18 is to be extended, and additional sender/receiver devices or entire additional sub-networks shall be added to an existing network.

The techniques according to the present disclosure address these challenges by means of additional encoding/decoding of addresses of a given address space, such as an address space corresponding to one of the sub-network 38a, 38b, 38c. This may allow providing unique addresses across a plurality of the sub-network 38a, 38b, 38c. In particular, each designated address space or sub-network 38a, 38b, 38c may be assigned its own designated encoding/decoding operation.

The techniques of the present disclosure may allow a given receiver device to identify a message that has been mis-routed from a different sub-network, and hence may prevent the receiver device from an undesired and possibly safety-critical operation in response to the mis-routed message. The techniques of the present disclosure may also accommodate cross-communication between sender/receiver devices in different sub-network 38a, 38b, 38c.

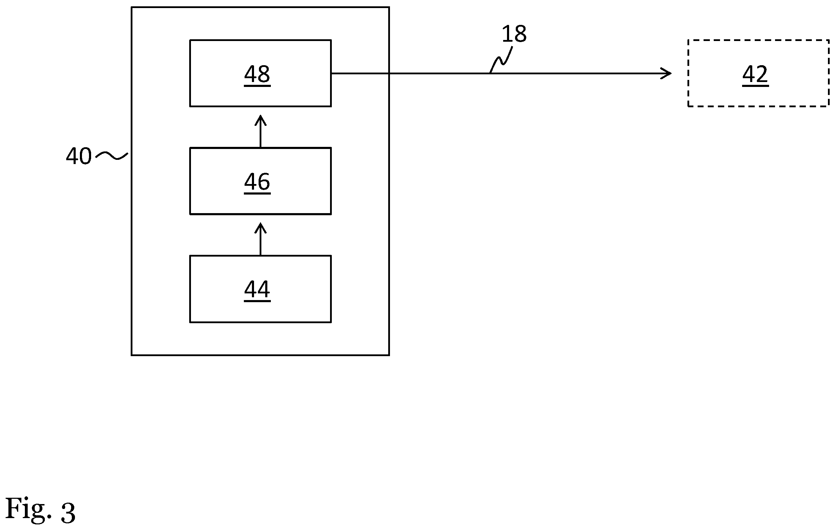

Fig. 3 is a schematic illustration of an industrial control sender device 40 according to an embodiment. For instance, any of the network devices described above with reference to Figs. 1 and 2 that is adapted to send messages over the industrial control network 18 can be considered an example of an industrial control sender device 40 as shown Fig. 3. In particular, industrial control sender device 40 can be any of the actuator units 20a, 20b, 20c, sensor units 24a, 24b, and industrial controller units 28a, 28b, 28c.

The industrial control sender device 40 is adapted to communicate with an industrial control receiver device 42 via the industrial control network 18 according to a designated communication protocol, such as FSoE ("Fail Safe over EtherCAT") as specified in IEC 61784-3-12. For instance, the industrial control receiver device 42 may be another network device within the same sub-network 38a, 38b, 38c, or even within a sub-network 38a, 38b, 38c that differs from the sub-network where the industrial control sender device 40 is located. For instance, any of the network devices described above with reference to Figs. 1 and 2 that is adapted to receive messages over the industrial control network 18 can be considered an example of an industrial control receiver device 42. In particular, industrial control receiver device 42 can be any of the actuator units 20a, 20b, 20c, sensor units 24a, 24b, or industrial controller units 28a, 28b, 28c.

The industrial control sender device 40 as illustrated in Fig. 3 comprises a message generation unit 44 adapted to generate a first message to be sent to the first industrial control receiver device 42, wherein the first message complies with the communication protocol and comprises a first functional data string and a first payload data string. The first functional data string may comprise a protocol header string and an address string according to the underlying communication protocol, such as FSoE. The address string may comprise a target address designating the industrial control receiver device 42 for which the message/ payload data is intended. The payload data string may comprise the data to be transferred to the industrial control receiver device 42, such as a command string for actuating a machinery communicatively coupled to the industrial control receiver device 42.

The industrial control sender device 40 additionally comprises an encoder unit 46 adapted to encode at least part of the first functional data string according to a first encoding algorithm to generate a first encoded message comprising a first encoded functional data string.

The industrial control sender device 40 further comprises a sender unit 48 adapted to send the first encoded message comprising the first encoded functional data string to the industrial control receiver device 42 via the industrial control network 18, such as via any of the field bus networks 30a, 30b, 30c described above with reference to Figs. 1 and 2.

The first encoding algorithm may operate on the address string only, while leaving the payload data string unencoded. The first encoding algorithm may convert the address string of the target industrial control receiver device 42 into an encoded address string that no longer complies with the underlying communication protocol, and in particular no longer represents a valid target address according to the communication protocol. Hence, in case the first encoded message is mis-routed to a foreign receiver device for which it is not intended, the message cannot be identified by that foreign receiver device as a valid instruction, because its header string and/or address string do not comply with the underlying communication protocol. This may prevent the mis-routed message from triggering any undesirable operation at the foreign receiver device. Instead, the foreign receiver device, upon receiving the mis-routed message, may enter into a safe state, and may trigger a notification to operating personnel, such as to the central programming and/or monitoring station 34. Alternatively, as will be described further below, the foreign receiver device may simply filter out the mis-routed message.

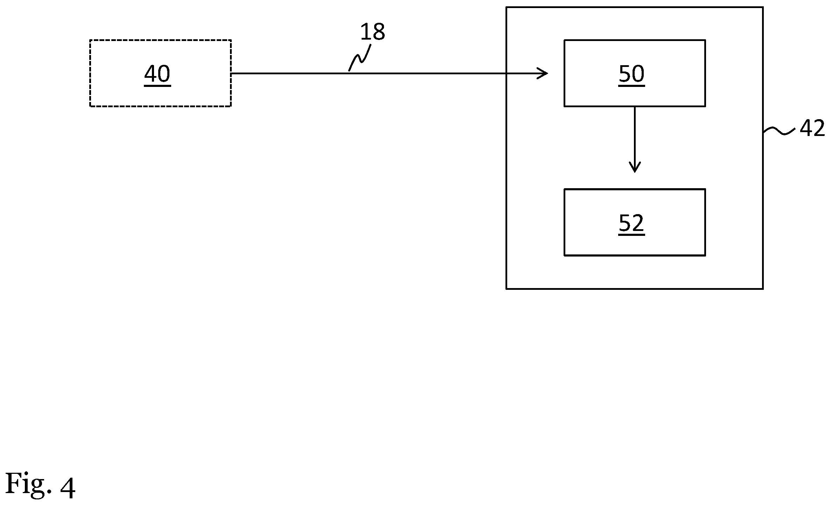

Fig. 4 is a schematic illustration of an industrial control receiver device 42 according to an embodiment. The industrial control receiver device 42 is adapted to communicate with a first industrial control sender device, such as the industrial control sender device 40 described above with reference to Fig. 3, via the industrial control network 18 according to the communication protocol.

The industrial control receiver device 42 comprises a receiver unit 50 adapted to receive a first message from the first industrial control sender device 40 via the industrial control network 18, the first message comprising a first functional data string and a first payload data string. For instance, the first message may be the first encoded message comprising the first encoded functional data string generated by the industrial control sender device 40 as described above with reference to Fig. 3.

The industrial control receiver device 42 additionally comprises a decoder unit 52 adapted to decode the first functional data string in accordance with a first decoding algorithm to generate a first decoded message comprising a first decoded functional data string. While the first message may be a message that does not comply with the communication protocol, the first decoding algorithm may convert the first functional data string into a first decoded message comprising a first decoded functional data string that complies with the communication protocol, for instance represents a valid target address and can therefore be processed by the industrial control receiver device 42 in accordance with the communication protocol.

Hence, when the first decoding algorithm implemented in the industrial control receiver device 42 matches the first encoding algorithm implemented in the industrial control sender device 40, the industrial control sender device 40 and the industrial control receiver device 42 may exchange messages according to the underlying (safety-relevant) communication protocol, whereas mis-routed messages from other sender devices can be identified as foreign messages, and are prevented from wreaking any havoc in the industrial control environment 10.

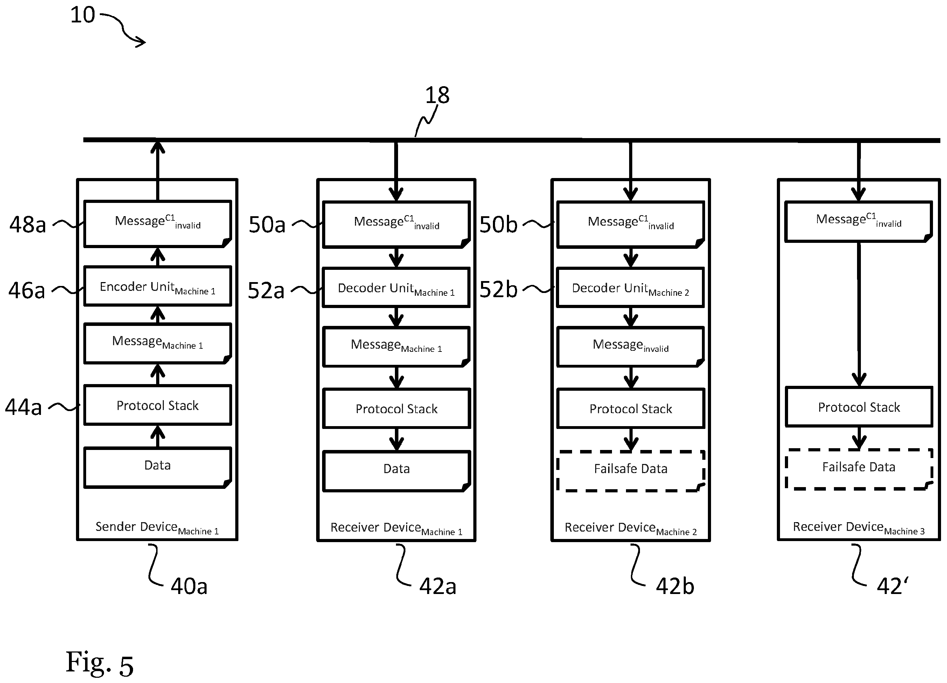

Fig. 5 is a schematic diagram that illustrates the interplay of an industrial control sender device 40a and several industrial control receiver devices 42a, 42b that are interconnected via the industrial control network 18 in an industrial control environment 10 according to an embodiment.

For instance, the industrial control sender device 40a and a first industrial control receiver device 42a may be associated with a first machinery in the industrial control environment 10 in a first sub-network 38a, as described above with reference to Figures 1 and 2. A second industrial control receiver device 42b may be associated with a second machinery in the industrial control environment 10 in a second sub-network 38b that is different from the first sub-network 38a. The industrial control sender device 40a may be an industrial control sender device 40 as described above with reference to Fig. 3, in particular may be any of the network devices 20a, 24a, 28a described above with reference to Figures 1 and 2. The industrial control receiver devices 42a, 42b may be an industrial control receiver device 42 as described above with reference to Fig. 4, and in particular may be any of the network devices 20a, 24a, 28a or 20b, 24b, 28b, respectively, as described above with reference to Figures 1 and 2.

In particular, the industrial control sender device 40a may comprise a message generation unit 44a adapted to generate a message based on a set of payload data that is to be sent to the first receiver device 42a, wherein the message is generated in a protocol stack in accordance with the underlying communication protocol. The message may comprise the payload data as well as a functional data string comprising header and target address information in accordance with the communication protocol. The industrial control sender device 40a additionally comprises an encoder unit 46a implementing a first encoding algorithm to convert the message into a first encoded message comprising a first encoded functional data string, and a first sender unit 48a adapted to send the first encoded message comprising the first encoded functional data string via the industrial control network 18 to the first receiver device 42a.

The first industrial control receiver device 42a comprises a first receiver unit 50a adapted to receive the first encoded message comprising the first encoded functional data string, and forward it to a first decoder unit 52a. The first decoder unit 52a implements a first decoding algorithm, which may be an inverse operation of the first encoding algorithm implemented in the first encoder unit 46a. The first decoder unit 52a thereby converts the first encoded message comprising the first encoded functional data string back into the original message prepared by the message generation unit 44a, comprising the original functional data string with the original address information that complies with the communication protocol. This allows the protocol stack in the first industrial control receiver device 42a to correctly identify and process the decoded message, and to retrieve the payload data.

The first encoded message may also be received at the second industrial control receiver device 42b by means of a second receiver unit 50b, such as due to a mis-routing of the message. The second receiver unit 50b forwards the received first encoded message to a second decoder unit 52b, which may be adapted to implement a second decoding algorithm that differs from the first decoding algorithm implemented in the first decoder unit 52a. In particular, the second decoding algorithm may not be the inverse of the first encoding algorithm, and hence may convert the first encoded message comprising the first encoded functional data string into a message that does not comply with the underlying communication protocol. The protocol stack of the second industrial control receiver device 42b will hence identify the message as faulty, and may switch into a failsafe state.

As further illustrated in Fig. 5, the protocol stack of an industrial control receiver device 42' that does not implement a decoder unit (such as a conventional industrial control receiver device) may also identify the received message as faulty, and may likewise switch into a failsafe state.

The techniques according to the present disclosure hence permit a partitioning the industrial control network 18 into separate sub-networks with different and disjoint address spaces generated by means of distinct encoder/decoder pairs, thereby allowing mis-routed safety-relevant messages to be identified and the corresponding network devices to be switched into a failsafe state.

In embodiments where data is also to be exchanged between different machines/sub-networks in the higher-level network on the basis of the same underlying communication protocol (e.g. for the implementation of safe network variables for inter-machine communication), the network devices also receive messages that cannot be interpreted by their protocol stacks, such as their field bus stacks responsible for the physical I/Os. As described above with reference to Fig. 5, the machines would thus switch to a failsafe state whenever such a message is received, and productive operation of the machines would hardly be feasible.

To prevent an interpretation of messages not intended for the respective industrial control receiver device, the industrial control receiver device may further comprise a comparison unit adapted to compare the respective first decoded functional data string with at least a predefined functional data string. For instance, the industrial control receiver device may be adapted to process the decoded message only if the comparison reveals that the first decoded functional data string matches a predefined functional data string, such as an expected functional data string. For instance, the comparison unit may be implemented as a filter which is adapted to accept and pass messages that comply with the communication protocol, and to reject messages that do not comply with the communication protocol without passing them on to the communication stack of the respective industrial control receiver device.

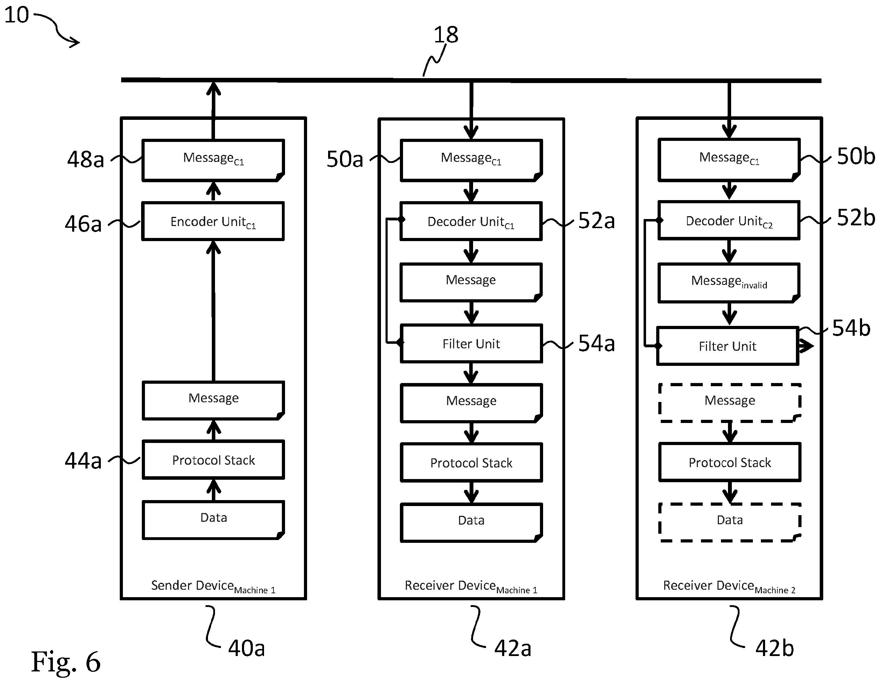

An example for an implementation involving filters is schematically illustrated in Fig. 6, which is generally similar to the architecture illustrated in Fig. 5 described above, and corresponding devices share the same reference signs.

However, the first industrial control receiver device 42a and the second industrial control receiver device 42b additionally each comprise a respective filter unit 54a, 54b downstream of the respective decoder units 52a and 52b, respectively.

With respect to the first industrial control receiver device 42a, if the received message is intended for that particular industrial control receiver device 42a and the respective decoder unit 52a implements a decoding algorithm that matches the encoding algorithm implemented in the encoder unit 46a, the decoded message will comprise a functional data string that complies with the communication protocol, and the first filter unit 54a will pass on that message to the respective protocol stack.

However, if the same message is received by the second industrial control receiver device 42b whose decoder unit 52b implements a decoding algorithm that does not match the encoding algorithm implemented in the encoder unit 46a, the resulting decoded message will have a functional data string that does not comply with the communication protocol, and the second filter unit 54b will reject the corresponding message, which will hence not be forwarded to the respective protocol stack and will not trigger the second industrial control receiver device 42b to move into a failsafe state, thereby ensuring the continued operation of the associated machinery.

The embodiment of Fig. 6 shows the comparison unit/filter unit 54a, 54b as stand-alone units. However, in other embodiments the comparison unit/filter unit 54a, 54b may also be integrated into the respective decoder unit 52a, 52b.

For the comparison unit/filter unit 54a, 54b to be able to identify a message to be rejected, it should be able to distinguish between messages that are falsified and those that are simply not intended for the downstream receiver. It is therefore advisable not to encode the I/O payload data or its protection, but only protocol-flow related information in the message.

According to an embodiment, for the FSoE protocol the command byte in the message header may be encoded in a way that the encoded command byte does not correspond to a valid command byte. In particular, a finite set of N pairs encoding algorithms/decoding algorithms may be selected such that:

(i) each decoding algorithm in a pair is the inverse operation of the corresponding encoding algorithm; and

(ii) decoding by means of a second decoding algorithm a functional data string encoded by means of a first encoding algorithm does not result in a valid command byte in case the second decoding algorithm and the first encoding algorithm belong to different pairs.

As an example, the n-th encoding operation may be chosen as the n-fold Rotate Left operation on the command byte X:

$$X^C = C_n(X) = \mathrm{ROL}(X, n) \qquad (1)$$

for each integer n=0,...,N-1.

$C_0(X)$ does not cause any effective coding, and therefore $X^C$ = X. This encoding therefore corresponds to an uncoded FSoE command in accordance with the state-of-the-art, allowing state-of-the-art network devices to be employed as one address space/sub-network in the context of the present disclosure.

According to the FSoE standard, the set of valid FSoE commands can be defined as follows:

$$\mathrm{CMD_{FSoE}} = \{0x08, 0x2A, 0x36, 0x4E, 0x52, 0x64\} \qquad (2)$$

For N=8 and $C_n(X)$ with n in [1, 7] and X $\in$ CMD$_{FSoE}$, we have

$$X^C = C_n(X) \notin CMD_{FSoE} \qquad (3)$$

since none of the values from $CMD_{FSoE}$ can be converted into another value from $CMD_{FSoE}$ by rotation.

Implementing the decoding algorithm as the inverse operation of the respective encoding algorithm, we have

$$D_n(C_n(X)) = C_n^{-1}(C_n(X)) = X \qquad (4)$$

for all command bytes X. So the appropriate decoder $D_n$ for $C_n$ for n =0,..., N-1 is the $n$-fold Rotate Right operation:

$$D_n(X^C) = C_n^{-1}(X^C) = \mathrm{ROR}(X^C, n) \qquad (5)$$

For the decoding $D_n(X^C)$ of a word $X$ ($m \neq n$) encoded with a non-matching encoder $C_m(X)$, it can be shown for all valid values of the FSoE command byte:

$$D_n(C_m(X)) = C_n^{-1}(C_m(X)) = \mathrm{ROR}(\mathrm{ROL}(X, m), n) = \mathrm{ROL}(X, m\text{-}n) \neq X \qquad (6)$$

This may allow any industrial control receiver device in the network to decide, on the basis of the decoded value of the command byte, whether the message was intended for that particular industrial control receiver device. This is only the case if it receives a value $X^D$ with $X^D \in CMD_{FSoE}$ for the FSoE command.

Table 1 illustrates the respective disjoint address spaces that result for the values from $CMD_{FSoE}$ as well as the encoder $C_1$ and two decoders $D_1$ and $D_3$, which decode the $C_1$-encoded and $C_0$-encoded (i.e. un-encoded) values.

Table 1

| $\mathbf{Word}_{Co}$ | $\mathbf{Word}_{C1}$ | $\mathbf{Word}_{D1(C1(X))}$ | $\mathbf{Word}_{D1(C0(X))}$ | $\mathbf{Word}_{D3(C1(X))}$ |
|---|---|---|---|---|
| $X^C = C_0(X) = $ ROL(X, 0) = X $X \in CMD_{FSoE}$ | $X^C = C_1(X) = $ ROL(X, 1) $X^C \notin CMD_{FSoE}$ | $X^D = D_1(C_1(X)) = C_1^{-1}(C_1(X)) = $ ROR(ROL($X$, 1), 1) $X^D = X$ | $X^D = D_1(C_0(X)) = C_1^{-1}(C_0(X)) = $ ROR(X, 1) $X^D \neq X$ $X^D \notin CMD_{FSoE}$ | $X^D = D_3(C_1(X)) = C_3^{-1}(C_1(X)) = $ ROR(ROL(X, 1), 3) = ROR(X, 2) $X^D \neq X$ $X^D \notin CMD_{FSoE}$ |
| 0x08 | 0x10 | oxo8 | 0x04 | 0X02 |
| 0x2A | 0x54 | 0x2A | 0x15 | 0x8A |
| 0x36 | 0x6C | 0x36 | 0x1B | 0x8D |
| 0x4E | 0x9C | 0x4E | 0x27 | 0x93 |
| 0x52 | 0xA4 | 0x52 | 0x29 | 0x94 |
| 0x64 | 0xC8 | 0x64 | 0x32 | 0x19 |

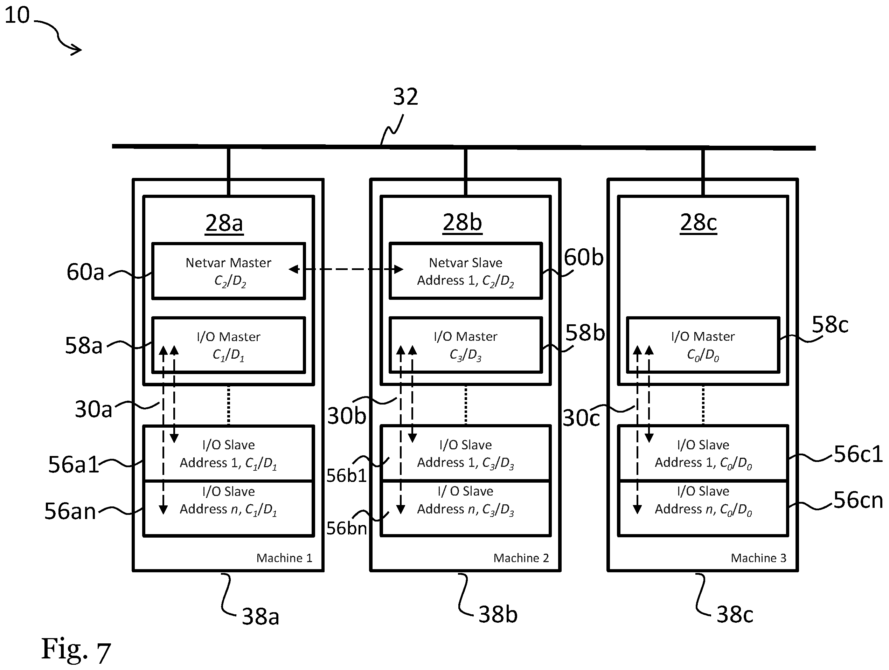

The additional encoders/decoders thereby effectively enhance the logical address width of the underlying basic communication protocol, making it possible for FSoE, for example, to have more than 65,535 nodes/network devices throughout the network. In general, by using N different encoder/decoder pairs, the address space for safe communication can therefore be extended N-fold. This may also allow tailored cross-communication between different sub-networks with different distinct address spaces, as will now be described in additional detail with reference to the embodiment illustrated in Fig. 7.

The industrial control environment 10 illustrated in Fig. 7 comprises three sub-networks 38a, 38b, 38c that are coupled by means of an interconnection network 32, similar to the architecture described above with reference to Figures 1 and 2. Each of the sub-networks 38a, 38b, 38c comprises a respective industrial controller unit 28a, 28b, 28c adapted to communicate with a plurality of first input/output slaves 56a1,..., 56an, second input/output slaves 56b1, ..., 56bn, and third input/output slaves 56c1, ..., 56cn, respectively, (for some integer number $n$) via respective field bus networks 30a, 30b, 30c. For instance, each of the first input/output slaves 56a1,..., 56an, second input/output slaves 56b1, ..., 56bn, and third input/output slaves 56c1, ..., 56cn may be an actuator unit 20a, 20b, 20c or a sensor unit 24a, 24b as described above with reference to Figures 1 and 2. For simplicity, the example of Fig. 7 assumes that each of the sub-networks 38a, 38b, 38c has the same number n of input/output slaves, but the disclosure is not so limited, and in other examples two or more of the sub-networks 38a, 38b, 38c may have a different number of input/output slaves.

Each of the first input/output slaves 56a1,..., 56an may have their unique addresses within the first sub-network 38a, and similarly for the second input/output slaves 56b1, ..., 56bn within the second sub-network 38b and the third input/output slaves 56c1, ..., 56cn within the third sub-network 38c.

The first industrial controller unit 28a comprises a first input/output master unit 58a for communication with each of the first input/output slaves 56a1,..., 56an via the first field bus network 30a. The first input/output master unit 58a may combine the functionality of an industrial control sender device 40 and an industrial control receiver device 42 as described above with reference to Figures 1 to 6. Similarly, the second industrial controller unit 28b comprises a second input/output master unit 58b for communication with each of the second input/output slaves 56b1,..., 56bn via the second field bus network 30b, whereas the third industrial controller unit 28c comprises a third input/output master unit 58c for communication with each of the third input/output slaves 56c1,..., 56cn via the third field bus network 30c. The second input/output master unit 58b and the third input/output master unit 58c generally correspond to the first input/output master unit 58a, but implement different pairs of encoding/decoding algorithms. As an example, the first input/output master unit 58a and the corresponding first input/output slaves 56a1, ...., 56an may implement a first pair $C_1/D_1$ of encoding/decoding algorithms as described with reference to Eqs. (1) to (6) above, whereas the second input/output master unit 58b and the corresponding second input/output slaves 56b1, ...., 56bn may implement a second pair $C_3/D_3$ of encoding/decoding algorithms, and the third input/output master unit 58c and the corresponding third input/output slaves 56c1, ...., 56cn may implement a third pair $C_0/D_0$ of encoding/decoding algorithms. In the example of Fig. 7, the third pair $C_0/D_0$ implements the identity operation, and hence corresponds to a state-of-the-art architecture. As described with reference to Eqs. (1) to (6) above, this configuration will ensure distinct and disjoint address spaces in each of the sub-networks 38a, 38b, 38c.

In addition, the first industrial controller unit 28a may comprise a netvar master unit 60a, and the second industrial controller unit 28b may comprise a corresponding netvar slave unit 60b. The netvar master unit 60a and the netvar slave unit 60b may both combine the functionality of an industrial control sender device 40 and an industrial control receiver device 42 as described above with reference to Figures 1 to 6, with a corresponding pair $C_2/D_2$ of encoding/decoding algorithms as described with reference to Eqs. (1) to (6) above. This may allow the first industrial controller unit 28a and the second industrial controller unit 28b to cross-communicate safety-relevant data via global network variables, such as via the interconnection network 32.

By means of this choice of encoding/decoding algorithms for the respective encoder units/decoder units in the network devices, only the desired communication links between network devices are feasible, whereas all other communication may be filtered out, as described above with reference to Fig. 6. The following Tables 2 to 4 show the respective target conditions that are desirable to ensure a safe communication, and confirm that with the choice of encoding/decoding algorithms as indicated above, the actual conditions meet the target conditions.

Receivers in first sub-network 38a:

Table 2

| Receiver Unit | Sender Unit | Target State | Processing | Actual State |
|---|---|---|---|---|
| I/O-Slave$_1$ | I/O-Master$_1$ | communication | $D_1(C_1(X)) = X$ | communication |
| | Netvar-Master$_1$ Netvar-Slave$_2$ | rejection | $D_1(C_2(X)) \neq X$ | rejection |
| | I/O-Master$_2$ I/O-Slave$_2$ | rejection | $D_1(C_3(X)) \neq X$ | rejection |
| | I/O-Master$_3$ I/O-Slave$_3$ | rejection | $D_1(C_0(X)) \neq X$ | rejection |
| I/O-Master$_1$ | I/O-Slave$_1$ | communication | $D_1(C_1(X)) = X$ | communication |
| | Netvar-Master$_1$ Netvar-Slave$_2$ | rejection | $D_1(C_2(X)) \neq X$ | rejection |
| | I/O-Master$_2$ I/O-Slave$_2$ | rejection | $D_1(C_3(X)) \neq X$ | rejection |
| | I/O-Master$_3$ I/O-Slave$_3$ | rejection | $D_1(C_0(X)) \neq X$ | rejection |
| Netvar-Master$_1$ | Netvar-Slave$_2$ | communication | $D_2(C_2(X)) = X$ | communication |
| | I/O-Master$_1$ I/O-Slave$_1$ | rejection | $D_2(C_1(X)) \neq X$ | rejection |
| | I/O-Master$_2$ I/O-Slave$_2$ | rejection | $D_2(C_3(X)) \neq X$ | rejection |
| | I/O-Master$_3$ I/O-Slave$_3$ | rejection | $D_2(C_0(X)) \neq X$ | rejection |

Receivers in second sub-network 38b:

Table 3

| Receiver Unit | Sender Unit | Target State | Processing | Actual State |
|---|---|---|---|---|
| I/O-Slave$_2$ | I/O-Master$_2$ | communication | $D_3(C_3(X)) = X$ | communication |
| | I/O-Master$_1$ I/O-Slave$_1$ | rejection | $D_3(C_1(X)) \neq X$ | rejection |
| | Netvar-Master$_1$ Netvar-Slave$_2$ | rejection | $D_3(C_2(X)) \neq X$ | rejection |
| | I/O-Master$_3$ I/O-Slave$_3$ | rejection | $D_3(C_0(X)) \neq X$ | rejection |
| I/O-Master$_2$ | I/O-Slave$_2$ | communication | $D_3(C_3(X)) = X$ | communication |
| | I/O-Master$_1$ I/O-Slave$_1$ | rejection | $D_3(C_1(X)) \neq X$ | rejection |
| | Netvar-Master$_1$ Netvar-Slave$_2$ | rejection | $D_3(C_2(X)) \neq X$ | rejection |
| | I/O-Master$_3$ I/O-Slave$_3$ | rejection | $D_3(C_0(X)) \neq X$ | rejection |
| Netvar-Slave$_2$ | Netvar-Master$_1$ | communication | $D_2(C_2(X)) = X$ | communication |
| | I/O-Master$_1$ I/O-Slave$_1$ | rejection | $D_2(C_1(X)) \neq X$ | rejection |
| | I/O-Master$_2$ I/O-Slave$_2$ | rejection | $D_2(C_3(X)) \neq X$ | rejection |
| | I/O-Master$_3$ I/O-Slave$_3$ | rejection | $D_2(C_0(X)) \neq X$ | rejection |

Receivers in third sub-network 38b:

Table 4

| Receiver Unit | Sender Unit | Target State | Processing | Actual State |
|---|---|---|---|---|
| I/O-Slave$_3$ | I/O-Master$_3$ | communication | $D_0(C_0(X)) = X$ | communication |
| | I/O-Master$_1$ I/O-Slave$_1$ | rejection | $D_0(C_1(X)) \neq X$ | rejection |
| | Netvar-Master$_1$ Netvar-Slave$_2$ | rejection | $D_0(C_2(X)) \neq X$ | rejection |
| | I/O-Master$_2$ I/O-Slave$_2$ | rejection | $D_0(C_3(X)) \neq X$ | rejection |
| I/O-Master$_3$ | I/O-Slave$_3$ | communication | $D_0(C_0(X)) = X$ | communication |
| | I/O-Master$_1$ I/O-Slave$_1$ | rejection | $D_0(C_1(X)) \neq X$ | rejection |
| | Netvar-Master$_1$ Netvar-Slave$_2$ | rejection | $D_0(C_2(X)) \neq X$ | rejection |
| | I/O-Master$_2$ I/O-Slave$_2$ | rejection | $D_0(C_3(X)) \neq X$ | rejection |

As an example, Table 5 shows the processing of a valid communication between the netvar master unit 60a in the first sub-network 38a and the corresponding netvar slave unit 60b in the second sub-network 38b for the minimal and maximal values of $CMD_{FSoE}$.

Table 5

| Netvar-Master$_1$ | | Netvar-Slave$_2$ | | |
|---|---|---|---|---|
| FSoE Stack → Encoder $C_2$ → Decoder $D_2$ → Filter → FSoE Stack | | | | |
| X | $X^C = ROL(X, 2)$ | $X^D = ROR(X^C, 2)$ | $X^D \in CMD_{FSoE}$? | X |
| 0x08 | 0x20 | 0x08 | Yes | 0x08 |
| 0x64 | 0x91 | 0x64 | Yes | 0x64 |

For comparison, Table 6 shows the processing of an invalid communication between the netvar master unit 60a in the first sub-network 38a and an input/output slave 56b1 in the second sub-network 38b, again for the minimal and maximal values of $CMD_{FSoE}$.

Table 6

| Netvar-Master$_1$ | | E/A-Slave$_2$ | | |
|---|---|---|---|---|
| FSoE Stack → Encoder $C_2$ → Decoder $D_3$ → Filter → FSoE Stack | | | | |
| $X$ | $X^C = ROL(X, 2)$ | $X^D = ROR(X^C, 3)$ | $X^D \in CMD_{FSoE}$? | X |
| 0x08 | 0X20 | 0X04 | No | No call |
| 0x64 | 0x91 | 0x32 | No | No call |

With the techniques according to the present disclosure, several logical networks with independent address spaces can also be defined within a given machine to make the management of secure addresses clearer and more modular. Even though FSoE was chosen as an example for concreteness, in principle the described procedure can be implemented for all safety-related communication protocols implemented on the application layer.

The techniques according to the present disclosure provide a number of significant advantages over conventional architectures:

The project engineers of the individual machines/sub-networks merely have to guarantee the uniqueness of n addresses and 3 encoders. In comparison, without employing the techniques of the present disclosure the designer of a machine would have to know all used addresses of the other machines and would have to choose the addresses in his machine unambiguously against all addresses in the industrial control environment. In other words, he would have to ensure unambiguity over 3 x n + 1 rather than only 3 encoders + n addresses. If m netvar connections are to be configured, there would even be 3 x n + m.

If the system is extended by a further machine/sub-network, the project engineer merely has to guarantee the uniqueness of the addresses in the new machine, as long as he selects an encoder that is unique in the system.

Industrial control environments equipped with exclusively "old" technology can be easily extended by machines with "new" technology without having to consider the number and settings of the existing machines.

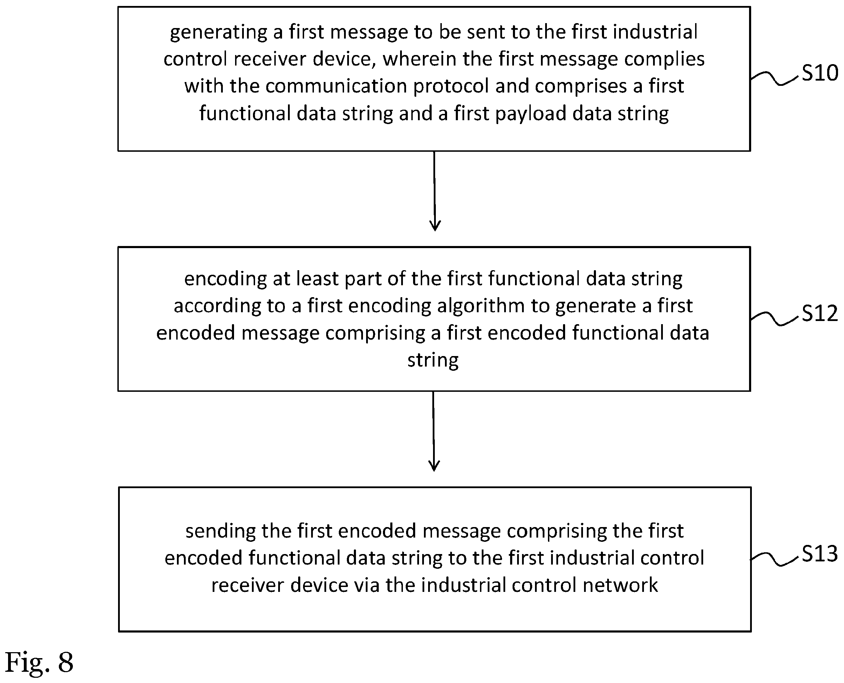

Fig. 8 is a flow diagram illustrating a method for communicating with a first industrial control receiver device in an industrial control network by means of a communication protocol, according to an embodiment.

In a first step S10, a first message to be sent to the first industrial control receiver device is generated, wherein the first message complies with the communication protocol and comprises a first functional data string and a first payload data string.

In a second step S12, at least part of the first functional data string is encoded according to a first encoding algorithm to generate a first encoded message comprising a first encoded functional data string.

In a third step S14, the first encoded message comprising the first encoded functional data string is sent to the first industrial control receiver device via the industrial control network.

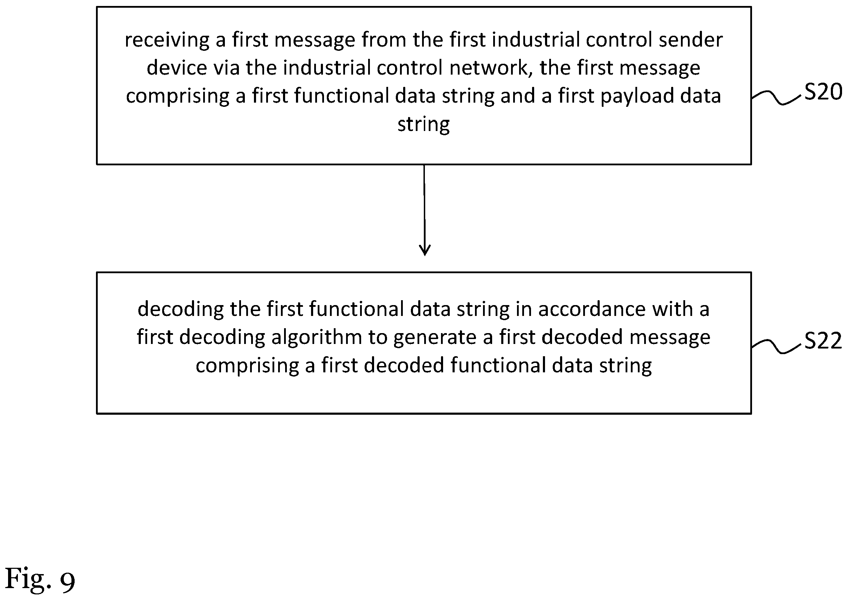

Fig. 9 is a flow diagram illustrating a method for communicating with a first industrial control sender device in an industrial control network by means of the communication protocol, according to an embodiment.

In a first step S20, a first message is received from the first industrial control sender device via the industrial control network, the first message comprising a first functional data string and a first payload data string.

In a second step S22, the first functional data string is decoded in accordance with a first decoding algorithm to generate a first decoded message comprising a first decoded functional data string.

The description of the embodiments and the figures merely serve to illustrate the techniques of the present disclosure, but should not be understood to imply any limitation. The scope of the disclosure is to be determined based on the appended claims.

<u>Reference Signs</u>

| | |
|---|---|
| 10 | industrial control environment |
| 12 | gantry crane |
| 14 | conveyor belt |
| 16 | packaging station |
| 18 | industrial control network |
| 20a, 20b, 20c | actuator units |
| 22 | hook assembly of gantry crane 12 |
| 24a, 24b | sensor units |
| 26 | infrared light barrier sensor |
| 28a, 28b, 28c | industrial controller units |
| 30a, 30b, 30c | fieldbus networks |
| 32 | interconnection network |
| 34 | central programming and/or monitoring station |
| 36a, 36b, 36c | router elements of the industrial controller units 28a, 28b, 28c |
| 38a, 38b, 38c | sub-networks |
| 40; 40a-40c | industrial control sender device |
| 42; 42'; 42a-42c | industrial control receiver device |
| 44; 44a | message generation unit of the industrial control sender device |
| 46; 46a | encoder unit of the industrial control sender device |
| 48; 48a | sender unit of the industrial control sender device |
| 50; 50a, 50b | receiver unit of the industrial control receiver device |
| 52; 52a, 52b | decoder unit of the industrial control receiver device |
| 54a, 54b | comparison unit/filter unit of the industrial control receiver device |
| 56a1, ...., 56an | first I/O slaves of first sub-network 38a |
| 56b1, ...., 56bn | second I/O slaves of second sub-network 38b |
| 56c1, ...., 56cn | third I/O slaves of third sub-network 38a |
| 58a, 58b, 58c | I/O master units |
| 60a | netvar master unit |
| 60b | netvar slave unit |

**Claims**

1. An industrial control sender device (40; 40a-40c) adapted to communicate with a first industrial control receiver device (42; 42'; 42a-42c) via an industrial control network (18) according to a communication protocol, the industrial control sender device (40; 40a-40c) comprising:

   a message generation unit (44; 44a) adapted to generate a first message to be sent to the first industrial control receiver device (42; 42'; 42a-42c), wherein the first message complies with the communication protocol and comprises a first functional data string and a first payload data string; wherein the first functional data string comprises a header string and/or an address string;
   an encoder unit (46; 46a) adapted to encode at least part of the first functional data string according to a first encoding algorithm to generate a first encoded message comprising a first encoded functional data string; and
   a sender unit (48; 48a) adapted to send the first payload data string and the first encoded message comprising the first encoded functional data string to the first industrial control receiver device (42; 42'; 42a-42c) via the industrial control network (18);
   wherein the first encoding algorithm matches a corresponding first decoding algorithm implemented in the first industrial control receiver device (42; 42'; 42a-42c) to decode the first encoded functional data string;
   **characterized in that** the first encoding algorithm does not match a second decoding algorithm implemented in a second industrial control receiver device (42; 42'; 42a-42c) to decode a second encoded functional data string, wherein the encoder unit is further adapted to encode at least part of a second functional data string according to a second encoding algorithm to generate the second encoded functional data string, wherein the second industrial control receiver device (42; 42'; 42a-42c) is different from the first industrial control receiver device (42; 42'; 42a-42c) and is connected to the industrial control sender device (40; 40a-40c) via the industrial control network (18).

2. The industrial control sender device (40; 40a-40c) according to claim 1, wherein the first encoded message and/or the first encoded functional data string does not comply with the communication protocol.

3. The industrial control sender device (40; 40a-40c) according to claim 1 or 2, wherein the first encoding algorithm is reversible.

4. An industrial control receiver device (42; 42a-42c) adapted to communicate with a first industrial control sender device (40; 40a-40c) via an industrial control network (18) according to a communication protocol, the industrial control receiver device (42; 42a-42c) comprising:

   a receiver unit (50; 50a, 50b) adapted to receive a first message from the first industrial control sender device (40; 40a-40c) via the industrial control network (18), the first message comprising a first functional data string and a first payload data string; wherein the first functional data string comprises a header string and/or an address string; and
   a decoder unit (52; 52a, 52b) adapted to decode the first functional data string in accordance with a first decoding algorithm to generate a first decoded message comprising a first decoded functional data string;
   wherein the first decoding algorithm matches a corresponding first encoding algorithm implemented in the first industrial control sender device (40; 40a-40c) to encode at least part of the first functional data string;
   **characterized in that** the first decoding algorithm does not match a second encoding algorithm implemented in a second industrial control sender device (40; 40a-40c) to encode at least part of a second functional data string, wherein the second industrial control sender device (40; 40a-40c) is different from the first industrial control sender device (40; 40a-40c) and is connected to the industrial control receiver device (42; 42a-42c) via the industrial control network (18).

5. The industrial control receiver device (42; 42a-42c) according to claim 4, further comprising a comparison unit (54a, 54b) adapted to compare the first decoded functional data string with at least a predefined functional data string.

6. The industrial control receiver device (42; 42a-42c) according to claim 4 or 5, wherein the first decoding algorithm is reversible.

7. A method, of an industrial control sender device, (40; 40a-40c), for communicating with a first industrial control receiver device (42; 42'; 42a-42c) in an industrial control network (18) by means of a communication protocol, the method comprising:

   generating a first message to be sent to the first industrial control receiver device (42; 42'; 42a-42c), wherein the first message complies with the communication protocol and comprises a first functional data string and a first payload data string; wherein the first functional data string comprises a header string and/or an address string;
   encoding at least part of the first functional data string according to a first encoding algorithm to generate a first encoded message comprising a first encoded functional data string; and
   sending the first payload data string and the first encoded message comprising the first encoded functional data string to the first industrial control receiver device (42; 42'; 42a-42c) via the industrial control network (18);
   wherein the first encoding algorithm matches a corresponding first decoding algorithm implemented in the first industrial control receiver device (42; 42'; 42a-42c) to decode the first encoded functional data string;
   **characterized in that** the first encoding algorithm does not match a second decoding algorithm implemented in a second industrial control receiver device (42; 42'; 42a-42c) to decode a second encoded functional data string, wherein the encoder unit is further adapted to encode at least part of a second functional data string according to a second encoding algorithm to generate the second encoded functional data string, wherein the second industrial control receiver device (42; 42'; 42a-42c) is different from the first industrial control receiver device (42; 42'; 42a-42c) and is connected to the industrial control sender device (40; 40a-40c) via the industrial control network (18).

8. A method, of an industrial control receiver device (42; 42a-42c), for communicating with a first industrial control sender device (40; 40a-40c) in an industrial control network (18) by means of a communication protocol, the method comprising:

receiving a first message from the first industrial control sender device (40; 40a-40c) via the industrial control network (18), the first message comprising a first functional data string and a first payload data string; wherein the first functional data string comprises a header string and/or an address string; and

decoding the first functional data string in accordance with a first decoding algorithm to generate a first decoded message comprising a first decoded functional data string;

wherein the first decoding algorithm matches a corresponding first encoding algorithm implemented in the first industrial control sender device (40; 40a-40c) to encode at least part of the first functional data string;

**characterized in that** the first decoding algorithm does not match a second encoding algorithm implemented in a second industrial control sender device (40; 40a-40c) to encode at least part of a second functional data string, wherein the second industrial control sender device (40; 40a-40c) is different from the first industrial control sender device (40; 40a-40c) and is connected to the industrial control receiver device (42; 42a-42c) via the industrial control network (18).

9. The method according to claim 8, further comprising comparing the first decoded functional data string with at least a predefined functional data string.

10. The method according to claim 8 or 9, further comprising: not decoding the first payload data string.

11. A computer program comprising computer-readable instructions, such that the instructions, when executed by a computing device, cause the computing device to implement a method according to any of the claims 7 to 10.


**Patentansprüche**

1. Industriesteuerungssendevorrichtung (40; 40a-40c), die dazu eingerichtet ist, mit einer ersten Industriesteuerungsempfangsvorrichtung (42; 42'; 42a-42c) über ein industrielles Steuerungsnetz (18) gemäß einem Kommunikationsprotokoll zu kommunizieren, wobei die Industriesteuerungssendevorrichtung (40; 40a-40c) Folgendes umfasst:

eine Nachrichtenerzeugungseinheit (44; 44a), die dazu eingerichtet ist, eine erste Nachricht zu erzeugen, die an die erste Industriesteuerungsempfangsvorrichtung (42; 42'; 42a-42c) zu senden ist, wobei die erste Nachricht dem Kommunikationsprotokoll entspricht und eine erste Funktionsdatenfolge und eine erste Nutzdatenfolge umfasst; wobei die erste Funktionsdatenfolge eine Headerfolge und/oder eine Adressfolge umfasst;

eine Codiereinheit (46; 46a), die dazu eingerichtet ist, mindestens einen Teil der ersten Funktionsdatenfolge gemäß einem ersten Codieralgorithmus zu codieren, um eine erste codierte Nachricht zu erzeugen, die eine erste codierte Funktionsdatenfolge umfasst; und

eine Sendeeinheit (48; 48a), die dazu eingerichtet ist, die erste Nutzdatenfolge und die erste codierte Nachricht, die die erste codierte Funktionsdatenfolge umfasst, über das industrielle Steuerungsnetz (18) an die erste Industriesteuerungsempfangsvorrichtung (42; 42'; 42a-42c) zu senden;

wobei der erste Codieralgorithmus zu einem entsprechenden ersten Decodieralgorithmus passt, der in der ersten Industriesteuerungsempfangsvorrichtung (42; 42'; 42a-42c) implementiert ist, um die erste codierte Funktionsdatenfolge zu decodieren;

**dadurch gekennzeichnet, dass** der erste Codieralgorithmus nicht zu einem zweiten Decodieralgorithmus passt, der in einer zweiten Industriesteuerungsempfangsvorrichtung (42; 42'; 42a-42c) implementiert ist, um eine zweite codierte Funktionsdatenfolge zu decodieren, wobei die Codiereinheit ferner dazu eingerichtet ist, mindestens einen Teil einer zweiten Funktionsdatenfolge gemäß einem zweiten Codieralgorithmus zu codieren, um die zweite codierte Funktionsdatenfolge zu erzeugen, wobei die zweite Industriesteuerungsempfangsvorrichtung (42; 42'; 42a-42c) von der ersten Industriesteuerungsempfangsvorrichtung (42; 42'; 42a-42c) verschieden ist und über das industrielle Steuerungsnetz (18) mit der Industriesteuerungssendevorrichtung (40; 40a-40c) verbunden ist.

2. Industriesteuerungssendevorrichtung (40; 40a-40c) nach Anspruch 1, wobei die erste codierte Nachricht und/oder die erste codierte Funktionsdatenfolge nicht dem Kommunikationsprotokoll entsprechen.

3. Industriesteuerungssendevorrichtung (40; 40a-40c) nach Anspruch 1 oder 2, wobei der erste Codieralgorithmus umkehrbar ist.

4. Industriesteuerungsempfangsvorrichtung (42; 42a-42c), die dazu eingerichtet ist, mit einer ersten Industriesteuerungssendevorrichtung (40; 40a-40c) über ein industrielles Steuerungsnetz (18) gemäß einem Kommunikationsprotokoll zu kommunizieren, wobei die Industriesteuerungsempfangsvorrichtung (42; 42a-42c) Folgendes umfasst:

eine Empfangseinheit (50; 50a, 50b), die dazu eingerichtet ist, eine erste Nachricht von der ersten Industriesteuerungssendevorrichtung (40; 40a-40c) über das industrielle Steuerungsnetz (18) zu empfangen, wobei die erste Nachricht eine erste Funktionsdatenfolge und eine erste Nutzdatenfolge umfasst; wobei die erste Funktionsdatenfolge eine Headerfolge und/oder eine Adressfolge umfasst; und
eine Decodiereinheit (52; 52a, 52b), die dazu eingerichtet ist, die erste Funktionsdatenfolge gemäß einem ersten Decodieralgorithmus zu decodieren, um eine erste decodierte Nachricht zu erzeugen, die eine erste decodierte Funktionsdatenfolge umfasst;
wobei der erste Decodieralgorithmus zu einem entsprechenden ersten Codieralgorithmus passt, der in der ersten Industriesteuerungssendevorrichtung (40; 40a-40c) implementiert ist, um zumindest einen Teil der ersten Funktionsdatenfolge zu codieren;
**dadurch gekennzeichnet, dass** der erste Decodieralgorithmus nicht zu einem zweiten Codieralgorithmus passt, der in einer zweiten Industriesteuerungssendevorrichtung (40; 40a-40c) implementiert ist, um zumindest einen Teil einer zweiten Funktionsdatenfolge zu codieren, wobei die zweite Industriesteuerungssendevorrichtung (40; 40a-40c) von der ersten Industriesteuerungssendevorrichtung (40; 40a-40c) verschieden ist und über das industrielle Steuerungsnetz (18) mit der Industriesteuerungsempfangsvorrichtung (42; 42a-42c) verbunden ist.

5. Industriesteuerungsempfangsvorrichtung (42; 42a-42c) nach Anspruch 4, ferner umfassend eine Vergleichseinheit (54a, 54b), die dazu eingerichtet ist, die erste decodierte Funktionsdatenfolge mit zumindest einer vordefinierten Funktionsdatenfolge zu vergleichen.

6. Industriesteuerungsempfangsvorrichtung (42; 42a-42c) nach Anspruch 4 oder 5, wobei der erste Decodieralgorithmus umkehrbar ist.

7. Verfahren einer Industriesteuerungssendevorrichtung (40; 40a-40c) zum Kommunizieren mit einer ersten Industriesteuerungsempfangsvorrichtung (42; 42'; 42a-42c) in einem industriellen Steuerungsnetz (18) mittels eines Kommunikationsprotokolls, wobei das Verfahren Folgendes umfasst:

Erzeugen einer ersten Nachricht, die an die erste Industriesteuerungsempfangsvorrichtung (42; 42'; 42a-42c) zu senden ist, wobei die erste Nachricht dem Kommunikationsprotokoll entspricht und eine erste Funktionsdatenfolge und eine erste Nutzdatenfolge umfasst; wobei die erste Funktionsdatenfolge eine Headerfolge und/oder eine Adressfolge umfasst;
Codieren mindestens eines Teils der ersten Funktionsdatenfolge gemäß einem ersten Codieralgorithmus, um eine erste codierte Nachricht zu erzeugen, die eine erste codierte Funktionsdatenfolge umfasst; und
Senden der ersten Nutzdatenfolge und der ersten codierten Nachricht, die die erste codierte Funktionsdatenfolge umfasst, über das industrielle Steuerungsnetz (18) an die erste Industriesteuerungsempfangsvorrichtung (42; 42'; 42a-42c);
wobei der erste Codieralgorithmus zu einem entsprechenden ersten Decodieralgorithmus passt, der in der ersten Industriesteuerungsempfangsvorrichtung (42; 42'; 42a-42c) implementiert ist, um die erste codierte Funktionsdatenfolge zu decodieren;
**dadurch gekennzeichnet, dass** der erste Codieralgorithmus nicht zu einem zweiten Decodieralgorithmus passt, der in einer zweiten Industriesteuerungsempfangsvorrichtung (42; 42'; 42a-42c) implementiert ist, um eine zweite codierte Funktionsdatenfolge zu decodieren, wobei die Codiereinheit ferner dazu eingerichtet ist, mindestens einen Teil einer zweiten Funktionsdatenfolge gemäß einem zweiten Codieralgorithmus zu codieren, um die zweite codierte Funktionsdatenfolge zu erzeugen, wobei die zweite Industriesteuerungsempfangsvorrichtung (42; 42'; 42a-42c) von der ersten Industriesteuerungsempfangsvorrichtung (42; 42'; 42a-42c) verschieden ist und über das industrielle Steuerungsnetz (18) mit der Industriesteuerungssendevorrichtung (40; 40a-40c) verbunden ist.

8. Verfahren einer Industriesteuerungsempfangsvorrichtung (42; 42a-42c) zum Kommunizieren mit einer ersten Industriesteuerungssendevorrichtung (40; 40a-40c) in einem industriellen Steuerungsnetz (18) mittels eines Kommunikationsprotokolls, wobei das Verfahren Folgendes umfasst:

Empfangen einer ersten Nachricht von der ersten Industriesteuerungssendevorrichtung (40; 40a-40c) über das industrielle Steuerungsnetz (18), wobei die erste Nachricht eine erste Funktionsdatenfolge und eine erste Nutzdatenfolge umfasst; wobei die erste Funktionsdatenfolge eine Headerfolge und/oder eine Adressfolge umfasst; und

Decodieren der ersten Funktionsdatenfolge gemäß einem ersten Decodieralgorithmus, um eine erste decodierte Nachricht zu erzeugen, die eine erste decodierte Funktionsdatenfolge umfasst;

wobei der erste Decodieralgorithmus zu einem entsprechenden ersten Codieralgorithmus passt, der in der ersten Industriesteuerungssendevorrichtung (40; 40a-40c) implementiert ist, um zumindest einen Teil der ersten Funktionsdatenfolge zu codieren;

**dadurch gekennzeichnet, dass** der erste Decodieralgorithmus nicht zu einem zweiten Codieralgorithmus passt, der in einer zweiten Industriesteuerungssendevorrichtung (40; 40a-40c) implementiert ist, um zumindest einen Teil einer zweiten Funktionsdatenfolge zu codieren, wobei die zweite Industriesteuerungssendevorrichtung (40; 40a-40c) von der ersten Industriesteuerungssendevorrichtung (40; 40a-40c) verschieden ist und über das industrielle Steuerungsnetz (18) mit der Industriesteuerungsempfangsvorrichtung (42; 42a-42c) verbunden ist.

9. Verfahren nach Anspruch 8, ferner umfassend ein Vergleichen der ersten decodierten Funktionsdatenfolge mit zumindest einer vordefinierten Funktionsdatenfolge.

10. Verfahren nach Anspruch 8 oder 9, ferner umfassend: kein Decodieren der ersten Nutzdatenfolge.

11. Computerprogramm, umfassend computerlesbare Anweisungen, so dass die Anweisungen, wenn sie von einer Rechenvorrichtung ausgeführt werden, bewirken, dass die Rechenvorrichtung ein Verfahren nach einem der Ansprüche 7 bis 10 implementiert.

**Revendications**

1. Dispositif émetteur de contrôle industriel (40 ; 40a-40c) adapté pour communiquer avec un premier dispositif récepteur de contrôle industriel (42 ; 42' ; 42a-42c) via un réseau de contrôle industriel (18) selon un protocole de communication, le dispositif émetteur de contrôle industriel (40 ; 40a-40c) comprenant :

une unité de génération de message (44 ; 44a) adaptée pour générer un premier message à envoyer au premier dispositif récepteur de contrôle industriel (42 ; 42' ; 42a-42c), dans lequel le premier message est conforme au protocole de communication et comprend une première chaîne de données fonctionnelles et une première chaîne de données de charge ; dans lequel la première chaîne de données fonctionnelles comprend une chaîne d'en-tête et/ou une chaîne d'adresse ;

une unité de codage (46 ; 46a) adaptée pour coder au moins une partie de la première chaîne de données fonctionnelles selon un premier algorithme de codage pour générer un premier message codé comprenant une première chaîne de données fonctionnelles codée ; et

une unité d'envoi (48 ; 48a) adaptée pour envoyer la première chaîne de données de charge et le premier message codé comprenant la première chaîne de données fonctionnelles codée au premier dispositif récepteur de contrôle industriel (42 ; 42' ; 42a-42c) via le réseau de contrôle industriel (18) ;

dans lequel le premier algorithme de codage correspond à un premier algorithme de décodage correspondant implémenté dans le premier dispositif récepteur de contrôle industriel (42 ; 42' ; 42a-42c) pour décoder la première chaîne de données fonctionnelles codée ;

**caractérisé en ce que** le premier algorithme de codage ne correspond pas à un second algorithme de décodage implémenté dans un second dispositif récepteur de contrôle industriel (42 ; 42' ; 42a-42c) pour décoder une seconde chaîne de données fonctionnelles codée, dans lequel l'unité de codage est adaptée en outre pour coder au moins une partie d'une seconde chaîne de données fonctionnelles selon un second algorithme de codage pour générer la seconde chaîne de données fonctionnelles codée, dans lequel le second dispositif récepteur de contrôle industriel (42 ; 42' ; 42a-42c) est différent du premier dispositif récepteur de contrôle industriel (42 ; 42' ; 42a-42c) et est connecté au dispositif émetteur de contrôle industriel (40 ; 40a-40c) via le réseau de contrôle industriel (18).

2. Dispositif émetteur de contrôle industriel (40 ; 40a-40c) selon la revendication 1, dans lequel le premier message codé et/ou la première chaîne de données fonctionnelles codée ne sont pas conformes au protocole de communication.

3. Dispositif émetteur de contrôle industriel (40 ; 40a-40c) selon la revendication 1 ou 2, dans lequel le premier algorithme de codage est réversible.

4. Dispositif récepteur de contrôle industriel (42 ; 42a-42c) adapté pour communiquer avec un premier dispositif émetteur de contrôle industriel (40 ; 40a-40c) via un réseau de contrôle industriel (18) selon un protocole de communication, le dispositif récepteur de contrôle industriel (42 ; 42a-42c) comprenant :

une unité de réception (50 ; 50a, 50b) adaptée pour recevoir un premier message du premier dispositif émetteur de contrôle industriel (40 ; 40a-40c) via le réseau de contrôle industriel (18), le premier message comprenant une première chaîne de données fonctionnelles et une première chaîne de données de charge ; dans lequel la première chaîne de données fonctionnelles comprend une chaîne d'en-tête et/ou une chaîne d'adresse ; et une unité de décodage (52 ; 52a, 52b) adaptée pour décoder la première chaîne de données fonctionnelles selon un premier algorithme de décodage pour générer un premier message décodé comprenant une première chaîne de données fonctionnelles décodée ;
dans lequel le premier algorithme de décodage correspond à un premier algorithme de codage correspondant implémenté dans le premier dispositif émetteur de contrôle industriel (40 ; 40a-40c) pour coder au moins une partie de la première chaîne de données fonctionnelles ;
**caractérisé en ce que** le premier algorithme de décodage ne correspond pas à un second algorithme de codage implémenté dans un second dispositif émetteur de contrôle industriel (40 ; 40a-40c) pour coder au moins une partie d'une seconde chaîne de données fonctionnelles, dans lequel le second dispositif émetteur de contrôle industriel (40 ; 40a-40c) est différent du premier dispositif émetteur de contrôle industriel (40 ; 40a-40c) et est connecté au dispositif récepteur de contrôle industriel (42 ; 42a-42c) via le réseau de contrôle industriel (18).

5. Dispositif récepteur de contrôle industriel (42 ; 42a-42c) selon la revendication 4, comprenant en outre une unité de comparaison (54a, 54b) adaptée pour comparer la première chaîne de données fonctionnelles décodée avec au moins une chaîne de données fonctionnelles prédéfinie.

6. Dispositif récepteur de contrôle industriel (42 ; 42a-42c) selon la revendication 4 ou 5, dans lequel le premier algorithme de décodage est réversible.

7. Procédé, d'un dispositif émetteur de contrôle industriel (40 ; 40a-40c), pour communiquer avec un premier dispositif récepteur de contrôle industriel (42 ; 42' ; 42a-42c) dans un réseau de contrôle industriel (18) au moyen d'un protocole de communication, le procédé comprenant :

la génération d'un premier message à envoyer au premier dispositif récepteur de contrôle industriel (42 ; 42' ; 42a-42c), dans lequel le premier message est conforme au protocole de communication et comprend une première chaîne de données fonctionnelles et une première chaîne de données de charge ; dans lequel la première chaîne de données fonctionnelles comprend une chaîne d'en-tête et/ou une chaîne d'adresse ;
le codage d'au moins une partie de la première chaîne de données fonctionnelles selon un premier algorithme de codage pour générer un premier message codé comprenant une première chaîne de données fonctionnelles codée ; et
l'envoi de la première chaîne de données de charge et du premier message codé comprenant la première chaîne de données fonctionnelles codée au premier dispositif récepteur de contrôle industriel (42 ; 42' ; 42a-42c) via le réseau de contrôle industriel (18) ;
dans lequel le premier algorithme de codage correspond à un premier algorithme de décodage correspondant implémenté dans le premier dispositif récepteur de contrôle industriel (42 ; 42' ; 42a-42c) pour décoder la première chaîne de données fonctionnelles codée ;
**caractérisé en ce que** le premier algorithme de codage ne correspond pas à un second algorithme de décodage implémenté dans un second dispositif récepteur de contrôle industriel (42 ; 42' ; 42a-42c) pour décoder une seconde chaîne de données fonctionnelles codée, dans lequel l'unité de codage est adaptée en outre pour coder au moins une partie d'une seconde chaîne de données fonctionnelles selon un second algorithme de codage pour générer la seconde chaîne de données fonctionnelles codée, dans lequel le second dispositif récepteur de contrôle industriel (42 ; 42' ; 42a-42c) est différent du premier dispositif récepteur de contrôle industriel (42 ; 42' ; 42a-42c) et est connecté au dispositif émetteur de contrôle industriel (40 ; 40a-40c) via le réseau de contrôle industriel (18).

8. Procédé, d'un dispositif récepteur de contrôle industriel (42 ; 42a-42c), pour communiquer avec un premier dispositif émetteur de contrôle industriel (40 ; 40a-40c) dans un réseau de contrôle industriel (18) au moyen d'un protocole de communication, le procédé comprenant :

la réception d'un premier message du premier dispositif émetteur de contrôle industriel (40 ; 40a-40c) via le réseau de contrôle industriel (18), le premier message comprenant une première chaîne de données fonctionnelles et une première chaîne de données de charge ; dans lequel la première chaîne de données fonctionnelles comprend une chaîne d'en-tête et/ou une chaîne d'adresse ; et

le décodage de la première chaîne de données fonctionnelles selon un premier algorithme de décodage pour générer un premier message décodé comprenant une première chaîne de données fonctionnelles décodée ; dans lequel le premier algorithme de décodage correspond à un premier algorithme de codage correspondant implémenté dans le premier dispositif émetteur de contrôle industriel (40 ; 40a-40c) pour coder au moins une partie de la première chaîne de données fonctionnelles ;

**caractérisé en ce que** le premier algorithme de décodage ne correspond pas à un second algorithme de codage implémenté dans un second dispositif émetteur de contrôle industriel (40 ; 40a-40c) pour coder au moins une partie d'une seconde chaîne de données fonctionnelles, dans lequel le second dispositif émetteur de contrôle industriel (40 ; 40a-40c) est différent du premier dispositif émetteur de contrôle industriel (40 ; 40a-40c) et est connecté au dispositif récepteur de contrôle industriel

(42 ; 42a-42c) via le réseau de contrôle industriel (18).

9. Procédé selon la revendication 8, comprenant en outre la comparaison de la première chaîne de données fonctionnelles décodée avec au moins une chaîne de données fonctionnelles prédéfinie.

10. Procédé selon la revendication 8 ou 9, comprenant en outre : le non-décodage de la première chaîne de données de charge.

11. Programme informatique comprenant des instructions lisibles par ordinateur, de sorte que les instructions, lorsqu'elles sont exécutées par un dispositif informatique, amènent le dispositif informatique à implémenter un procédé selon l'une quelconque des revendications 7 à 10.

Fig. 1

Fig. 2

EP 3 952 245 B1

Fig. 3

Fig. 4

EP 3 952 245 B1

Fig. 5

Fig. 6

Fig. 7

EP 3 952 245 B1

generating a first message to be sent to the first industrial control receiver device, wherein the first message complies with the communication protocol and comprises a first functional data string and a first payload data string ⌇⌇—S10

encoding at least part of the first functional data string according to a first encoding algorithm to generate a first encoded message comprising a first encoded functional data string ⌇⌇—S12

sending the first encoded message comprising the first encoded functional data string to the first industrial control receiver device via the industrial control network ⌇⌇—S13

## Fig. 8

receiving a first message from the first industrial control sender device via the industrial control network, the first message comprising a first functional data string and a first payload data string

S20

decoding the first functional data string in accordance with a first decoding algorithm to generate a first decoded message comprising a first decoded functional data string

S22

Fig. 9

EP 3 952 245 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170139388 A1

- WO 2020125988 A1

**Non-patent literature cited in the description**

- **ERICSSON'S**. Ethernet Header Compression email discussion report, TP. *Tdoc R2-1902355, 3GPP TSG-RAN WG2 #105*, 25 February 2019

- **CMCC'S**. Enhancement for Time-Sensitive Networking. *R2-1815270, 3GPP TSG-RAN WG2 Meeting #103bis*, 08 October 2018